# NEW EUROPEAN PATENT SPECIFICATION

(11) **EP 3 421 312 B2**
(45) Date of publication and mention of the opposition decision: **19.11.2025**
(45) Mention of the grant of the patent: 25.11.2020
(21) Application number: 17756676.7
(22) Date of filing: 24.02.2017
(51) Int. Cl.: B60T 17/18, B60T 15/36, B60T 17/00

(54) **AIR SUPPLY SYSTEM**
LUFTZUFUHRSYSTEM
SYSTÈME DE DISTRIBUTION D'AIR

(30) Priority: 24.02.2016 JP 2016033380; 29.03.2016 JP 2016066242; 26.04.2016 JP 2016088049
(43) Date of publication of application: 02.01.2019
(73) Proprietor: Nabtesco Automotive Corporation, Tokyo 102-0093 (JP)
(72) Inventor: TANAKA, Katsunori, Tokyo 102-0093 (JP); OOTA, Yusuke, Tokyo 102-0093 (JP)
(74) Representative: Grünecker Patent- und Rechtsanwälte PartG mbB
(86) International application number: PCT/JP2017/007234
(87) International publication number: WO 2017/146242

(56) References cited:
- EP-A1- 2 281 725
- EP-A2- 0 535 392
- EP-B1- 3 112 230
- EP-B1- 3 344 503
- WO-A2-2006/125615
- DE-A1- 102005 024 120
- DE-A1- 102007 016 335
- DE-A1- 102008 014 458
- DE-A1- 102009 037 636
- DE-A1- 102014 011 422
- DE-A1- 19 653 264
- DE-A1- 19 958 324
- DE-A1- 3 527 907
- DE-C1- 4 132 768
- JP-A- 2009 023 627
- JP-A- 2010 164 193
- JP-A- 2015 150 908
- US-A- 5 503 467
- US-A1- 2003 020 329
- US-A1- 2008 202 871
- US-B2- 8 297 712
- US-B2- 8 297 714
- US-B2- 8 366 209
- US-B2- 8 708 430
- US-B2- 8 794 718
- US-B2- 9 827 961

## Description

### TECHNICAL FIELD

The present invention relates to an air supply system that controls supply and discharge of air to and from a brake mechanism of a vehicle.

### BACKGROUND ART

Vehicles such as trucks have pneumatic brake systems, which are driven by compressed air. The pneumatic brake system includes a service brake mechanism, which applies and releases the service brake (foot brake), and a parking brake mechanism, which applies and releases the parking brake. The pneumatic brake system includes an air supply system, which dries the compressed air stored in the compressor and supplies the dried compressed air to the mechanisms. In recent years, an air supply system is provided that includes an electronic control unit, which controls the air supply system. (See Patent Document 1, for example.) Moreover, WO 2006/125615 A2 relates to a parking brake mechanism of a utility vehicle, comprising at least one spring brake cylinder and a first parking brake circuit with a reservoir pressure container and a first control valve mechanism which ventilates or bleeds the at least one spring brake cylinder. The invention in WO 2006/125615 A2 is characterized in that, in the event of the failure of the first parking brake circuit, an additional electro-pneumatic parking brake circuit with an additional, separate reservoir pressure container and an additional control valve mechanism comprising at least one magnetic valve at least ventilates the spring brake cylinder in the event of emergency release. At least the additional control valve mechanism is located in direct proximity of the at least one spring brake cylinder. Furthermore, an electronically controlled braking system, particularly for commercial vehicles, is known from DE 196 53 264 A1.

### PRIOR ART DOCUMENT

### Patent Document

Patent Document 1: JP 2007-326516 A

### SUMMARY OF THE INVENTION

### Problems that the Invention is to Solve

However, this system is not designed to maintain the function of the service brake when an emergency, such as an abnormality in a part of the air supply system, occurs. Thus, the system has room for improvement in the redundancy of the brake electronic control system.

It is an objective of the present invention to provide an air supply system in which the redundancy of the brake electronic control system is improved.

In accordance with the present invention an air supply system according to claim 1 is provided.

### BRIEF DESCRIPTION OF THE DRAWINGS

Fig. 1 is a diagram showing the schematic configuration of a brake system of a first embodiment.
Fig. 2 is a circuit diagram showing the schematic configuration of safety modules, each forming the brake system of Fig. 2.
Fig. 3 is a circuit diagram showing the operation in the normal driving mode of the safety modules of Fig. 3.
Fig. 4 is a circuit diagram showing the operation in the application mode of the safety modules of Fig. 3.
Fig. 5 is a circuit diagram showing the operation in the release mode of the safety modules of Fig. 3.
Fig. 6 is a schematic view showing vehicles that use brake systems of a second embodiment.
Fig. 7 is a diagram showing the schematic configuration of a module of Fig. 6.
Fig. 8 is a block diagram showing the schematic configuration of a brake system of a third embodiment.
Fig. 9 is a circuit diagram showing the schematic configuration of a safety module that forms the brake system of Fig. 8.
Fig. 10 is a circuit diagram showing the operation in the backup mode of the safety module of Fig. 9.
Fig. 11 is a circuit diagram showing the operation in the forced pressure-reduction brake mode of the safety module of Fig. 9.
Fig. 12 is a circuit diagram showing the schematic configuration of a safety module that forms a brake system of a fourth embodiment.
Fig. 13 is a circuit diagram showing the operation in the backup mode of the safety module of Fig. 12.
Fig. 14 is a circuit diagram showing the operation in the forced pressure-reduction brake mode of the safety module of Fig. 12.
Fig. 15 is a circuit diagram showing the operation in the re-driving mode of the safety module of Fig. 12.
Fig. 16 is a circuit diagram showing the schematic configuration of a safety module that forms a brake system of a fifth embodiment.
Fig. 17 is a circuit diagram showing the operation in the backup mode of the safety module of Fig. 16.
Fig. 18 is a circuit diagram showing the operation in the forced pressure-reduction brake mode of the safety module of Fig. 16.
Fig. 19 is a circuit diagram showing the operation in the re-driving mode of the safety module of Fig. 16.
Fig. 20 is a circuit diagram showing the operation in the re-driving mode of the safety module of the embodiment.
Fig. 21 is a circuit diagram showing the operation in the re-driving mode of the safety module of the embodiment.
Fig. 22 is a circuit diagram showing the schematic configuration of a safety module that forms a brake system of a seventh embodiment.
Fig. 23 is a circuit diagram showing the operation in the backup mode of the safety module of the embodiment.
Fig. 24 is a circuit diagram showing the operation in the re-driving mode of the safety module of the embodiment.
Fig. 25 is a circuit diagram showing the operation in the re-driving mode of the safety module of the embodiment.
Fig. 26 is a schematic view showing vehicles forming a platoon, each vehicle including an air supply system of a seventh embodiment.
Fig. 27 is a block diagram showing the pneumatic brake system of the seventh embodiment.
Fig. 28 is a circuit diagram showing the schematic configuration of the air supply system of Fig. 27 and a state in which the parking brake is applied under normal conditions.
Fig. 29 is a circuit diagram showing the schematic configuration of the air supply system of Fig. 27 and a state in which the parking brake is released under normal conditions.
Fig. 30 is a circuit diagram showing the schematic configuration of the air supply system of Fig. 27 and a state in which the forced brake is applied.
Fig. 31 is a circuit diagram showing the schematic configuration of the air supply system of Fig. 27 and a state in which an abnormality occurs in the first controller and the brake is applied in response to a deceleration command.
Fig. 32 is a circuit diagram showing the schematic configuration of the air supply system of Fig. 27 and a state in which an abnormality occurs in the first controller and the brake applied in response to a deceleration command is released.
Fig. 33 is a circuit diagram showing the schematic configuration of the air supply system of Fig. 27 and a preparation step for re-driving.
Fig. 34 is a circuit diagram showing the schematic configuration of the air supply system of Fig. 27 and a state in which re-driving is possible.
Fig. 35 is a circuit diagram showing the schematic configuration of a safety module of another embodiment.
Fig. 36 is a diagram showing a part of an air supply system of another embodiment.

### MODES FOR CARRYING OUT AN AIR SUPPLY SYSTEM

### First Embodiment

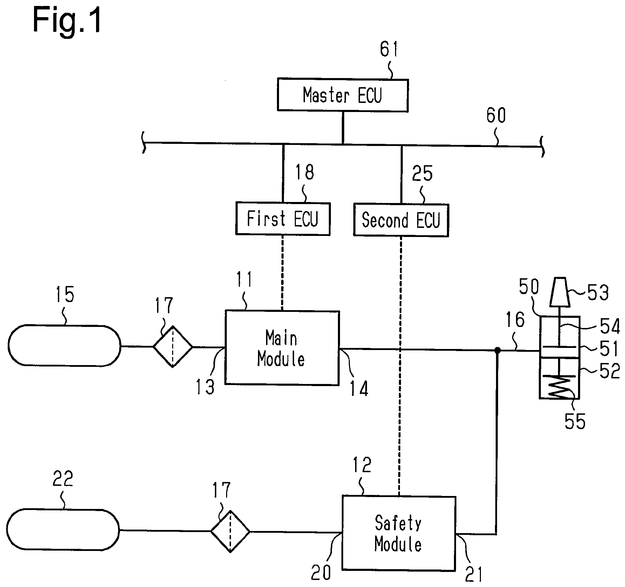

Referring to Figs. 1 to 5, a first embodiment of an air supply system is described that is used in a brake system installed in a combination vehicle. The brake system includes a parking brake and a service brake, which are driven by compressed dry air. The combination vehicle includes a tractor and a trailer coupled to each other.

As shown in Fig. 1, the vehicle includes, as the brake system of the tractor, a main module 11, which serves as a main brake circuit, and a safety module 12, which serves as an air supply system. A main module 11 is provided for each wheel of the tractor. A safety module 12 is also provided for each wheel of the tractor. Fig. 1 only shows the main module 11 and the safety module 12 for one of the four wheels of the tractor. The main modules 11 and the safety modules 12 for the other wheels are not shown.

The main module 11 operates during normal driving, whereas the safety module 12 operates under emergency conditions in which the main module 11 is inoperative. The emergency conditions include a state in which an abnormality occurs in a part of the main module 11 and a state in which an abnormality occurring in the driver prevents the driver from controlling the vehicle.

The main module 11 includes an input port 13 and an output port 14. The input port 13 is connected to a brake air tank 15, and the output port 14 is connected to a spring brake chamber 50 through a chamber connection line 16. A filter 17 for drying air is arranged between the brake air tank 15 and the main module 11.

The spring brake chamber 50 is arranged in each rear wheel of the tractor. The spring brake chamber 50 includes a first control chamber 51, which controls the service brake, and a second control chamber 52, which controls the parking brake. Air in the brake air tank 15 is supplied to the first control chamber 51. The amount of supplied air depends on the degree the brake pedal is operated by the driver. When air is supplied to the first control chamber 51, the air pressure in the first control chamber 51 moves a push rod 54 toward the wheel. A wedge 53 provided at the tip of the push rod 54 presses the brake lining on the wheel outward, and the friction between the brake shoes and the brake lining applies the service brake. When air is discharged from the first control chamber 51, the wedge 53 is retracted from the brake lining, releasing the service brake. When air is discharged from the second control chamber 52, a spring 55 expands and moves the push rod 54 toward the wheel. The urging force of the spring 55 allows the wedge 53 to press the brake lining on the wheel outward, thereby applying the parking brake. When air is supplied to the second control chamber 52, the wedge 53 is retracted from the brake lining, releasing the parking brake.

The output port 14 is connected to the first control chamber 51 of the spring brake chamber 50. Each front wheel of the tractor has a service brake chamber, which includes a first control chamber 51, a push rod 54, and a wedge 53. The service brake chamber applies and releases only the service brake and does not apply or release the parking brake. The safety module 12 connected to the service brake chamber is connected to the first control chamber 51 of the service brake chamber.

The safety module 12 is arranged in parallel with the main module 11. The safety module 12 includes an input port 20 and an output port 21. The input port 20 is connected to a suspension air tank 22, which is provided in the air suspension (suspension system) of the vehicle. A filter 17 is arranged between the suspension air tank 22 and the input port 20. The output port 21 is connected to the first control chamber 51 of the spring brake chamber 50 or the service brake chamber by the chamber connection line 16. The safety module 12 is arranged in parallel with the main module 11, avoiding adverse effects on the operation of the main module 11.

The main module 11 includes a first electronic control unit (ECU) 18, which serves as a main controller, and control valves controlled by the first ECU 18. The safety module 12 includes a second ECU 25, which serves as a controller, and control valves controlled by the second ECU 25. The first ECU 18 and the second ECU 25 are connected to an on-board network 60, such as the controller area network (CAN), and are capable of sending and receiving various types of information. The on-board network 60 is connected to a master ECU 61, which controls operations of the first ECU 18 and the second ECU 25. The master ECU 61 sends commands to the first ECU 18 and the second ECU 25, which perform various operations according to the commands.

To detect any abnormality in the driver's condition, the master ECU 61 determines if the driver is in an abnormal condition by using detection signals received from devices, such as a device that recognizes the driver's face to determine if the driver is dozing or unconscious, and a device for detecting the pulse and breathing rate of the driver.

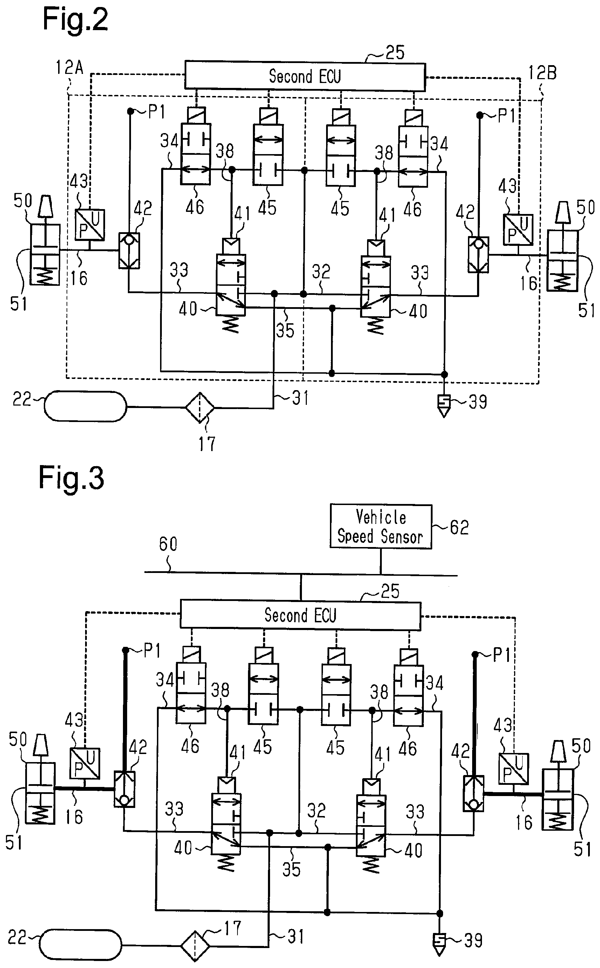

Referring to Fig. 2, the schematic configuration of the safety module 12 connected to the spring brake chamber 50 is now described. Fig. 2 shows circuits 12A and 12B of a pair of safety modules 12 that is provided for a pair of wheels on one axle. The safety modules 12 share a common second ECU 25.

A first flow passage 31, which is connected to a suspension air tank 22, is connected to a second flow passage 32, which distributes air to the pair of safety modules 12. A third flow passage 33 is positioned between the second flow passage 32 and a chamber connection line 16. A middle section of the third flow passage 33 is connected to a relay valve 40.

The relay valve 40 is a three-port, two-position valve, which is connected to the second flow passage 32, the third flow passage 33, and a fifth flow passage 35, and is operated by air pressure. The relay valve 40 is in the supply position when its signal input port 41 receives an air pressure signal. When the signal input port 41 does not receive an air pressure signal, that is, when the signal input port 41 is not filled with air, the relay valve 40 is in the discharge position. In the supply position, the relay valve 40 provides communication between the second flow passage 32 and the third flow passage 33. That is, the air supplied from the suspension air tank 22 is supplied to the spring brake chamber 50 through the third flow passage 33. In the discharge position, the relay valve 40 provides communication between the fifth flow passage 35 and the third flow passage 33. The fifth flow passage 35 connects the two relay valves 40 in their discharge positions to the discharge port 39. In the discharge position, the air in each spring brake chamber 50 is discharged from the discharge port 39 through the chamber connection line 16, the third flow passage 33, the fifth flow passage 35, and other passages.

A switching portion 42 is provided between the third flow passage 33 and the chamber connection line 16. The switching portion 42 is connected to a main-side port P1 for the main module 11, the third flow passage 33, and the chamber connection line 16. The switching portion 42 includes a double check valve. The switching portion 42 permits airflow to the spring brake chamber 50 from one of the main module 11 and the third flow passage 33 that has a higher pressure, and shuts airflow to the one with a lower pressure. When an abnormality occurs in the main module 11 and prevents the main module 11 from operating, the main-side port P1 does not receive air from the main module 11, so that airflow between the main-side port P1 and the spring brake chamber 50 is shut.

A pressure sensor 43 for detecting the pressure in the chamber connection line 16 is arranged in a middle section of the chamber connection line 16. The pressure sensor 43 outputs to the second ECU 25 a signal corresponding to the pressure in the chamber connection line 16.

The first end of a fourth flow passage 34 is connected to the second flow passage 32. The second end of the fourth flow passage 34 is connected to the discharge port 39. A first control valve 45 and a second control valve 46, which are controlled by the second ECU 25, are arranged in the fourth flow passage 34. The first control valve 45 Is closer to the second flow passage 32 than the second control valve 46, that is, the first control valve 45 is located upstream of the second control valve 46.

The first control valve 45 is a normally-closed electromagnetic valve, which has a shutoff position in a non-energized state and a connection position in an energized state.

The second control valve 46 is a normally-open electromagnetic valve, which has a connection position in a non-energized state and a shutoff position in an energized state. The flow passage between the first control valve 45 and the second control valve 46 is connected to a signal line 38, which is connected to the signal input port 41 of the relay valve 40. The combination of the position of the first control valve 45 and the position of the second control valve 46 enables the controlling of the air state within the signal line 38. This allows the flow passages of high-pressure air to be opened and closed with less power. The first and second control valves 45 and 46, which control the relay valve 40, are only electromagnetic valves used In this configuration, reducing the number of components of the safety module 12.

Referring to Figs. 3 to 5, the operation of the safety module 12 is now described. The safety module 12 has a normal driving mode, which is used while the main module 11 is operating, an application mode, which is used to apply brakes while the main module 11 does not operate, and a release mode, which is used to release brakes while the main module 11 does not operate. In Figs. 3 to 5, the bold solid lines indicate the flow passages that are filled with compressed air.

Referring to Fig. 3, the normal driving mode of the safety module 12 is now described.

As shown in Fig. 3, when the main module 11 is operating normally, the first control valve 45 is in the shutoff position, shutting supply of air from the suspension air tank 22 (the shutoff state). The second control valve 46 is in the connection position and discharges the air in the fourth flow passage 34 from the discharge port 39 (the connection state). The signal input port 41 of the relay valve 40 is not filled with air, causing air to be discharged through the fifth flow passage 35 and from the discharge port 39. Thus, air is supplied to and discharged from the spring brake chamber 50 without the safety module 12 being involved.

In addition, when the main module 11 is operating normally, the main-side port P1 has a higher pressure, so that the switching portion 42 shuts airflow between the spring brake chamber 50 and the safety module 12. The pressure sensor 43 detects the pressure in the chamber connection line 16 and outputs a signal corresponding to the pressure to the second ECU 25. The vehicle speed sensor 62 outputs a signal corresponding to the vehicle speed to the second ECU 25 via the on-board network 60. The second ECU 25 calculates the actual deceleration based on the vehicle speed. The second ECU 25 learns and stores in the storing portion the relationship between the actual deceleration and the pressure in the chamber connection line 16. When the safety module 12 is activated, the ECU 25 receives from the master ECU 61 a requested value of deceleration, which is a deceleration requested by the master ECU 61. The second ECU 25 reads out the learning information on the relationship between the actual deceleration and the pressure in the chamber connection line 16 from the storage portion, and controls, based on the obtained learning information, the pressure in the chamber connection line 16 such that the actual deceleration becomes closer to the deceleration request value. In the configuration described above, the actual deceleration is calculated based on the vehicle speed received from the vehicle speed sensor 62. However, the actual deceleration may be calculated based on the acceleration received from an acceleration sensor. When the acceleration is a negative value, the value represents deceleration. Further, the second ECU 25 may control the pressure in the chamber connection line 16 such that the actual jerk, which is the rate of change of acceleration, becomes closer to the requested jerk. The jerk may be calculated using the acceleration sensor or the vehicle speed sensor 62. The acceleration sensor and the vehicle speed sensor 62 correspond to a vehicle speed detection portion.

When a failure occurs in the master ECU 61 or the first ECU 18 of the main module 11, the second ECU 25 of the safety module 12 receives a failure signal via the on-board network 60. In addition, the second ECU 25 receives a vehicle speed signal from the vehicle speed sensor 62, which detects the rotation speed of the wheel, via the on-board network 60. When receiving a failure signal, the second ECU 25 determines whether to apply emergency brake based on the vehicle speed obtained from the vehicle speed signal. For example, if a condition for starting emergency braking is satisfied, such as when the vehicle speed reaches a predetermined value while the failure signal is input, the second ECU 25 switches the safety module 12 to the application mode. If a condition for starting deceleration-command braking is satisfied, such as when a deceleration command is input from the master ECU 61 while the failure signal is input, the second ECU 25 switches the safety module 12 to the application mode. A deceleration command may be issued when the driver operates the brake pedal or when the relative distance to an obstacle decreases to the lower limit, for example. The master ECU 61 determines whether to output a deceleration command.

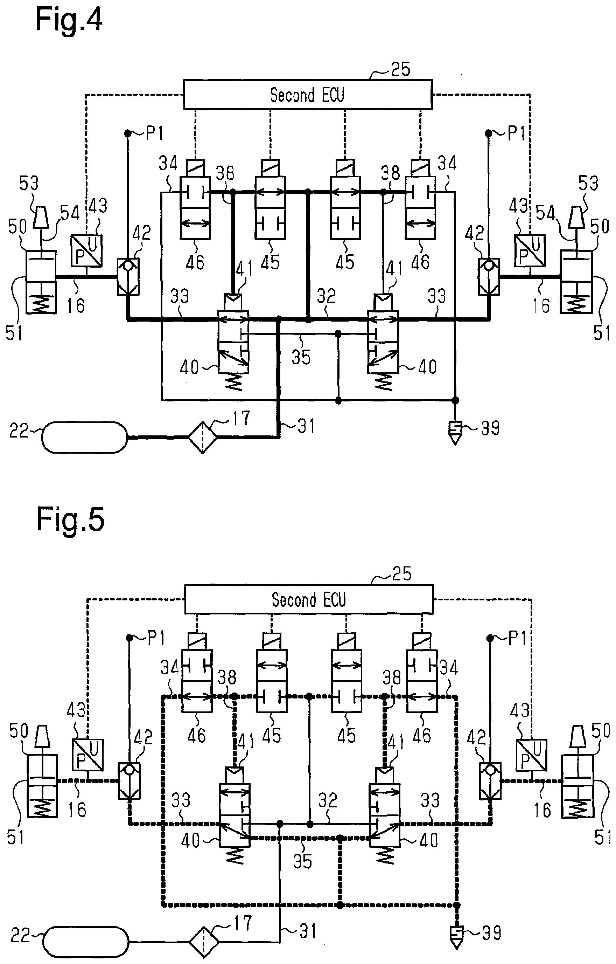

Referring to Fig. 4, the application mode of the safety module 12 is now described.

As shown in Fig. 4, the master ECU 61 stops the operation of the main module 11 when a condition for starting emergency braking or a condition for starting braking in response to a deceleration command is satisfied. When the main module 11 stops operating, the switching portion 42 shuts the main-side port P1.

When receiving a command for starting application of brakes from the master ECU 61, the second ECU 25 energizes the first control valve 45 and the second control valve 46 of each of the safety modules 12. This places the first control valve 45 in the connection position and the second control valve 46 in the shutoff position. The first flow passage 31, the second flow passage 32, a part of the fourth flow passage 34, and the signal line 38 are thus filled with air, placing the relay valve 40 in the connection position. Accordingly, the air supplied from the suspension air tank 22 is supplied to the first control chamber 51 of the spring brake chamber 50 through the second flow passage 32, the relay valve 40, and the switching portion 42. This applies the service brake. In addition, the second ECU 25 obtains the requested value of deceleration from the master ECU 61, calculates the required pressure based on the learning result, and controls the first and second control valves 45 and 46 so as to obtain the required pressure. When the pressure is determined to be too high, the second ECU 25 de-energizes the first and second control valves 45 and 46. When the pressure is determined to be too low, the second ECU 25 energizes the first and second control valves 45 and 46. To adjust the pressure, the second ECU 25 may open and close the first control valve 45 and the second control valve 46 by performing control of inputting high-frequency signals or by performing the pulse width modulation (PWM) control.

Referring to Fig. 5, the release mode of the safety module 12 is now described. In Fig. 5, the bold broken lines indicate the flow passages from which air is being discharged.

As shown in Fig. 5, when a command to start releasing brakes is input from the master ECU 61, the second ECU 25 de-energizes the first and second control valves 45 and 46 of each of the safety modules 12. This places the first control valve 45 in the shutoff position and the second control valve 46 in the connection position, allowing the air in the fourth flow passage 34 to be discharged from the discharge port 39. The air in the signal line 38 is discharged through the fourth flow passage 34, placing the relay valve 40 in the discharge position. The air in the first control chamber 51 of the spring brake chamber 50 is discharged from the discharge port 39 through the chamber connection line 16 and the third flow passage 33. This releases the service brake.

When an abnormality occurs in the second ECU 25 or in a part of the safety module 12, the first and second control valves 45 and 46 are de-energized, thereby releasing the service brake. Since the service brake and the parking brake do not operate simultaneously, releasing the service brake permits application of the parking brake.

As described above, the present embodiment has the following advantages.
(1) When the main module 11 is not operating, the switching portion 42 connects the relay valve 40 to the spring brake chamber 50 (or the service brake chamber). This allows air to be supplied to and discharged from the spring brake chamber 50 through the relay valve 40, the position of which is controlled by the second ECU 25. Thus, in an emergency state such as when an abnormality occurs in the main module 11, the safety module 12 operates in place of the main module 11 to apply the service brake. This improves the redundancy of the brake electronic control system.
(2) The position of the relay valve 40 is switched by energizing and de-energizing the first control valve 45 and the second control valve 46. As such, the high-pressure flow passages are opened and closed with the simple configuration.
(3) The relationship between the pressure in the spring brake chamber 50 and the vehicle speed is learned in advance while the main module 11 operates and the safety module 12 does not operate. Consequently, it is possible to adjust the pressure in the spring brake chamber 50 to a suitable pressure according to the requested value of acceleration or deceleration when the safety module 12 operates in an emergency.
(4) The safety module 12 uses the suspension air tank 22 as the air supply source, and the main module 11 uses the brake air tank 15 as the air supply source. Thus, even when an abnormality, such as air leakage, occurs in the brake air tank 15, the brakes can be applied and released.

### Second Embodiment

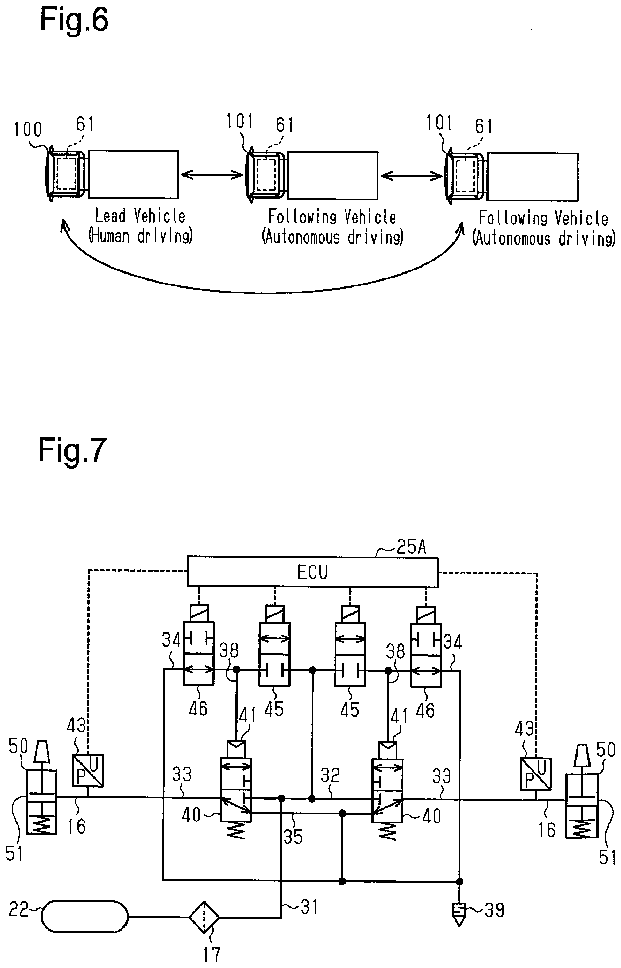

Referring to Figs. 6 and 7, a second embodiment of an air supply system is described that is used as a system for autonomous vehicles that travel in a platoon. The following descriptions focus mainly on the differences from the first embodiment. The basic configuration of the air supply system of the present embodiment is equivalent to that of the first embodiment. In the drawings, the same reference numerals are given to those components that are substantially the same as the corresponding components of the first embodiment. Such components will not be described in detail.

As shown in Fig, 6, platoon driving involves a platoon including a lead vehicle 100, which is controlled by a driver, and autonomous following vehicles 101. The lead vehicle 100 and the following vehicles 101 are combination vehicles. The master ECU 61 of the lead vehicle 100 and the master ECUs 61 of the following vehicles 101 wirelessly transmit and receive various types of information and travel while maintaining a fixed distance between one another. Wireless communication may be performed between adjacent vehicles in the platoon, or between the lead vehicle 100 and each of the following vehicles 101. Fig. 6 shows an example in which wireless communication is performed between adjacent vehicles and between the last following vehicle 101 and the lead vehicle 100.

The crewed lead vehicle 100 applies brakes in response to braking by the driver, and each of the autonomous following vehicles 101 applies brakes following the vehicle immediately in front. As such, each following vehicle 101 requires an automatic brake circuit that automatically applies and releases brakes in response to a command from the master ECU 61, but a technology related to such automatic braking has yet to be established. Thus, the present embodiment uses the safety module 12 as an automatic brake circuit that operates even during normal driving. The platoon shown in Fig. 6 includes three combination vehicles, but the platoon may include any multiple number of vehicles. The platoon may include two vehicles, or four or more vehicles.

As shown in Fig. 7, the safety module 12 of the second embodiment does not include the switching portion 42, and the relay valve 40 is connected to the spring brake chamber 50. The ECU 25A, which corresponds to the second ECU of the first embodiment, energizes the first and second control valves 45 and 46 to apply the service brake, and de-energizes the first and second control valves 45 and 46 to release the service brake.

As described above, the present embodiment has the following advantage.
(5) In each autonomous following vehicle 101, the ECU 25A controls the first and second control valves 45 and 46 to perform supply and discharge of air to and from the spring brake chamber 50 through the relay valve 40. As such, the safety module 12 operates in place of the main module 11 to apply the service brake in autonomous driving.

### Third Embodiment

Referring to Figs. 1 and 8 to 10, a third embodiment of an air supply system is described that is used in a brake system for platoon driving. The brake system includes a parking brake and a service brake, which are driven by compressed dry air. The vehicles forming the platoon are trucks with integral cargo platforms (cargo vehicles).

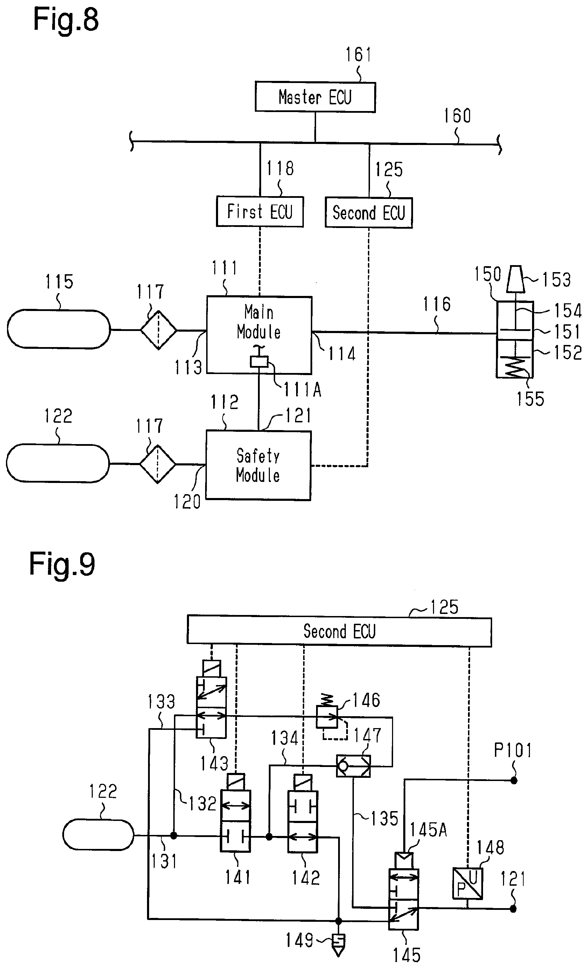

Referring to Fig. 8, the schematic configuration of the brake system of a following vehicle 101 is now described. The following vehicle 101 includes a main module 111, which serves as a main brake circuit, and a safety module 112, which serves as an air supply system. A main module 111 is provided for each wheel of the following vehicle 101. A safety module 112 is also provided for each wheel. Fig. 1 only shows the main module 111 and the safety module 112 provided for one of the wheels. The main modules 111 and the safety modules 112 for the other wheels are not shown.

The main module 111 operates under normal conditions, whereas the safety module 112 operates under emergency conditions in which the main module 111 is inoperative.

The main module 111 includes an input port 113 and an output port 114. The input port 113 is connected to a brake air tank 115, and the output port 114 is connected to a brake chamber 150 by a chamber connection line 116. A filter 117 for drying air is arranged between the brake air tank 115 and the main module 111.

The spring brake chamber 150 is arranged in each rear wheel of the following vehicle 101. The spring brake chamber 150 includes a first control chamber 151, which controls the service brake, and a second control chamber 152, which controls the parking brake. Air in the brake air tank 115 is supplied to the first control chamber 151. The amount of supplied air depends on the degree the brake pedal is operated by the driver. When air is supplied to the first control chamber 151, the air pressure in the first control chamber 151 moves the push rod 154 toward the wheel. A wedge 153 provided at the tip of the push rod 154 presses the brake lining on the wheel outward, and the friction between the brake shoes and the brake lining applies the service brake. When air is discharged from the first control chamber 151, the wedge 153 is retracted from the brake lining, releasing the service brake. When air is discharged from the second control chamber 152, a spring 155 expands and moves the push rod 154 toward the wheel. The urging force of the spring 155 allows the wedge 153 to press the brake lining on the wheel outward, applying the parking brake. When air is supplied to the second control chamber 152, the wedge 153 is retracted from the brake lining, releasing the parking brake.

The output port 114 is connected to the first control chamber 151 of the spring brake chamber 150. Each front wheel has a service brake chamber, which includes a first control chamber 151, a push rod 154, and a wedge 153. The service brake chamber applies and releases only the service brake. The safety module 112 connected to the service brake chamber is connected to the first control chamber 151 of the service brake chamber. The spring brake chamber 150 and the service brake chamber are referred to as brake chambers 150 when descriptions are given without distinction between them.

The safety module 112 includes an input port 120 and a main-side port 121. The input port 120 is connected to a suspension air tank 122, which is provided in the air suspension (suspension system) of the vehicle. The suspension air tank 122 serves as an air supply source. A filter 117 is arranged between the suspension air tank 122 and the input port 120. The main-side port 121 is connected to a backup valve 111A of the main module 111. The backup valve 111A of the main module 111 is closed under normal conditions and opened under emergency conditions. That is, the safety module 112 is connected to the first control chamber 151 of the brake chamber 150 through the main module 111.

The main module 111 includes a first electronic control unit (ECU) 18, which serves as a main controller, and control valves controlled by the first ECU 18. The safety module 112 includes a second ECU 25, which serves as a controller, and control valves controlled by the second ECU 25. The first ECU 18 and the second ECU 25 are connected to an on-board network 160, such as the controller area network (CAN), and are capable of sending and receiving various types of information. The on-board network 160 is connected to a master ECU 61, which controls operations of the first and second ECUs 18 and 25. The master ECU 61 sends commands to the first and second ECUs 18 and 25, which perform various operations according to the commands.

Referring to Fig. 9, the schematic configuration of the safety module 112 connected to the brake chamber 150 is now described. The safety module 112 corresponds to an air supply system. Fig. 8 shows the safety module 112 provided for one of the wheels.

The suspension air tank 122 is connected to a first flow passage 131, which includes a first control valve 141 and a second control valve 142. The first flow passage 131 forms a first supply flow passage. The first control valve 141 corresponds to a first electromagnetic valve, and the second control valve 142 corresponds to a third electromagnetic valve. The first control valve 141 is a normally-closed electromagnetic valve, which is in the shutoff position when non-energized and in the connection position when energized. In the connection position, the first control valve 141 permits airflow between the primary side and the secondary side in either direction. The second control valve 142 is a normally-open electromagnetic valve, which is in the connection position when non-energized and in the shutoff position when energized. In the connection position, the second control valve 142 connects the first flow passage 131 to the discharge port 149 and permits airflow between the primary side and the secondary side in either direction. Air is discharged from the discharge port 149 to the outside of the air supply system.

A section of the first flow passage 131 between the suspension air tank 122 and the first control valve 141 is connected to the first end of a second flow passage 132. The second flow passage 132 forms a second supply flow passage. The second end of the second flow passage 132 is connected to a double check valve 147, which corresponds to a switching portion. The second flow passage 132 includes a third control valve 143, which corresponds to a second electromagnetic valve.

The third control valve 143 is a three-port, two-position valve. When the suspension air tank 122 is on the upstream side and the main-side port 121 is on the downstream side, the third control valve 143 is connected to the upstream side of the second flow passage 132, a third flow passage 133, and the downstream side of the second flow passage 132. The third flow passage 133 discharges the air received through the third control valve 143 from the discharge port 149. When non-energized, the third control valve 143 is in the supply position, in which the third control valve 143 connects the upstream side of the second flow passage 132 to the downstream side of the second flow passage 132. When energized, the third control valve 143 is in the discharge position, in which the third control valve 143 connects the third flow passage 133 to the downstream side of the second flow passage 132.

A middle section of the second flow passage 132 includes a pressure reducing valve 146. The pressure reducing valve 146 reduces the pressure of the air flowing through the second flow passage 132 to a predetermined pressure or less. The double check valve 147 located at the other end of the second flow passage 132 is connected to the second flow passage 132, a fourth flow passage 134, and a fifth flow passage 135. The fourth flow passage 134 is connected to the first flow passage 131. Thus, the double check valve 147 permits airflow to the fifth flow passage 135 from one of the first flow passage 131 and the second flow passage 132 that has a higher pressure.

The fifth flow passage 135 is connected to a direction switching valve 145, which corresponds to a direction switching portion. The direction switching valve 145 is a three-port, two-position pneumatic valve, which is driven by entry and discharging of air into and from its signal input port 145A. The signal input port 145A is connected to a parking brake port P101 connected to a parking brake valve of a parking brake system (parking brake circuit). While the parking brake is released, air Is supplied to the parking brake port P101. While the parking brake is applied, air is discharged from the parking brake port P101.

The direction switching valve 145 is in the discharge position when no air pressure signal is input to the signal input port 145A, and is in the supply position when an air pressure signal is input. When the direction switching valve 145 is in the supply position, the fifth flow passage 135 is connected to the main-side port 121, permitting airflow from one of the fifth flow passage 135 and the main-side port 121 of the safety module 112 that has a higher pressure to the other with a lower pressure. When the direction switching valve 145 is in the discharge position, the third flow passage 133 is connected to the main-side port 121, discharging air through the discharge port 149.

A pressure sensor 148 is connected to a section between the main-side port 121 and the direction switching valve 145. The pressure sensor 148 detects the pressure in the main module 111 and outputs a signal corresponding to the detected pressure to the second ECU 25. The second ECU 25 learns the correlation between the pressure in the main module 111 and the vehicle speed or the deceleration, based on the signal received from the pressure sensor 148 and the vehicle speed received from a vehicle speed sensor (not shown) or the deceleration received from an acceleration sensor (not shown).

Referring to Figs. 9 to 11, the operation of the safety module 112 is now described. When the main module 111 is in normal condition with no abnormality, the backup valve 111A of the main module 111 is closed.

As shown in Fig. 9, under normal conditions, the first and second control valves 141 and 142 are non-energized and the third control valve 143 is energized. The first control valve 141 is in the shutoff position, shutting the first flow passage 131. The third control valve 143 is in the discharge position, shutting the second flow passage 132. This prevents air supply from the suspension air tank 122 to the brake chamber 150 through the main module 111, so that the safety module 112 does not affect the operation of the main module 111.

The safety module 112 has a backup mode, which is enabled when an abnormality occurs in the main module 111, and a forced pressure-reduction brake mode.

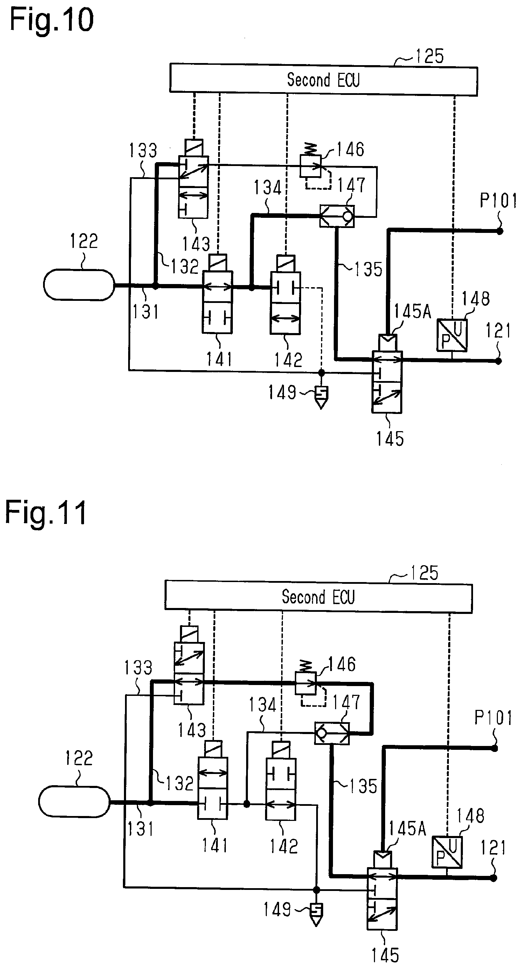

Referring to Fig. 10, the backup mode is now described. In the backup mode, the safety module 112 applies and releases the service brake in place of the main module 111. The backup valve 111A is opened in the backup mode.

The second ECU 25 receives a deceleration command from the master ECU 61. At this time, the backup valve 111A of the main module 111 is opened. The bold solid lines indicate flow passages that are filled with air.

In response to the deceleration command from the master ECU 61, the second ECU 25 energizes the first to third control valves 141 to 143. This places the first control valve 141 in the connection position and the second control valve 142 in the shutoff position, in which the second control valve 142 shuts the discharge port 149. The third control valve 143 is in the discharge position, in which the third control valve 143 shuts the upstream side of the second flow passage 132 and connects the downstream side of the second flow passage to the third flow passage 133. This allows the fourth flow passage 134, which is connected to the double check valve 147, to have a higher pressure than the second flow passage 132, so that the double check valve 147 permits airflow from the fourth flow passage 134 to the fifth flow passage 135.

While the following vehicle 101 is traveling, the parking brake is released and air is supplied to the signal input port 145A from the parking brake port P101. This places the direction switching valve 145 in the supply position. The air supplied from the suspension air tank 122 to the first flow passage 131 flows through the double check valve 147, the fifth flow passage 135, and the direction switching valve 145 and is supplied to the main module 111 from the main-side port 121. The air supplied to the main module 111 is sent to the brake chamber 150 through the backup valve 111A, thereby applying the service brake.

To release the service brake, the second ECU 25 de-energizes the first and second control valves 141 and 142 and energizes the third control valve 143. This places the first control valve 141 in the shutoff position and the third control valve 143 in the discharge position, thereby stopping the supply of air from the suspension air tank 122. The air in the brake chamber 150 is discharged from the discharge port 149 through the main-side port 121, the direction switching valve 145, which is in the supply position, the double check valve 147, and the second control valve 142, which is in the connection position.

Referring to Fig. 11, the forced pressure-reduction brake mode is now described. The forced pressure-reduction brake mode is used to forcibly apply brakes to stop the vehicle when abnormalities occur in the main module 111 and the safety module 112. In platoon driving, the vehicles travel while maintaining a fixed distance between one another. That is, deceleration of the lead vehicle 100 causes the first following vehicle 101 immediately behind the lead vehicle 100 to decelerate following the lead vehicle 100, and the second following vehicle 101 immediately behind the first following vehicle 101 decelerates following the first following vehicle 101. As such, when one vehicle in the platoon brakes suddenly, this vehicle will collide with the following vehicle 101 immediately behind. The vehicles need to decelerate without colliding with the vehicles in front and behind in the forced pressure-reduction brake mode.

In the forced pressure-reduction brake mode, the second ECU 25 de-energizes the first to third control valves 141 to 143. The first control valve 141 is in the shutoff position. The second control valve 142 is in the connection position, providing communication between the fourth flow passage 134 and the discharge port 149. The third control valve 143 is in the supply position, opening the second flow passage 132. This allows the second flow passage 132, which is connected to the double check valve 147, to have a higher pressure than the fourth flow passage 134, so that the double check valve 147 permits airflow from the second flow passage 132 to the fifth flow passage 135.

Air is supplied from the parking brake port P101 to the signal input port 145A, placing the direction switching valve 145 in the supply position. The air supplied from the suspension air tank 122 thus flows through the second flow passage 132. The pressure reducing valve 146 in the second flow passage 132 reduces the pressure of the supplied air to a predetermined pressure or less. The predetermined pressure is set such that the brake pressure decelerates the vehicle without causing collisions with the vehicles in front and behind. In the platoon, a greater predetermined pressure is set for a vehicle that is farther from the first lead vehicle 100. Thus, when the lead vehicle 100 stops, the following vehicles 100 stop in succession from rear to front. This allows each of the following vehicles 101 to stop without colliding with the vehicles immediately in front and behind.

The decompressed air is supplied to the main module 111 through the double check valve 147, the fifth flow passage 135, and the direction switching valve 145. The air supplied to the main module 111 is sent to the brake chamber 150 through the backup valve 111A, thereby applying the service brake.

As described above, the present embodiment has the following advantage.
(6) When an abnormality occurs in the main module 111, the second ECU 25 controls the air supply system to apply and release the service brake. The first control valve 141, the third control valve 143, and the double check valve 147 allow for switching between the supply of air through the first flow passage 131 and the supply of air through the second flow passage 132. The second flow passage 132 includes the pressure reducing valve 146, allowing the brake pressure to be reduced when air is supplied through the second flow passage 132 to the brake chamber 150. This limits application of sudden brakes. Consequently, each of the following vehicles 101 traveling in the platoon can decelerate without colliding with the vehicles immediately in front and behind.
(7) The second control valve 142, which is controlled by the second ECU 25, switches the direction of flow through the double check valve 147. Control of the second ECU 25 thus switches between the supply of air through the first flow passage 131 and the supply of air through the second flow passage 132.
(8) The direction switching valve 145 allows for switching between a state in which air is supplied to the brake chamber 150 and a state in which air is discharged from the brake chamber. The direction switching valve 145 is driven by the air pressure in the parking brake port P101, which is connected to the flow passage of the parking brake system. As such, the service brake is not applied while the parking brake is applied.

### Fourth Embodiment

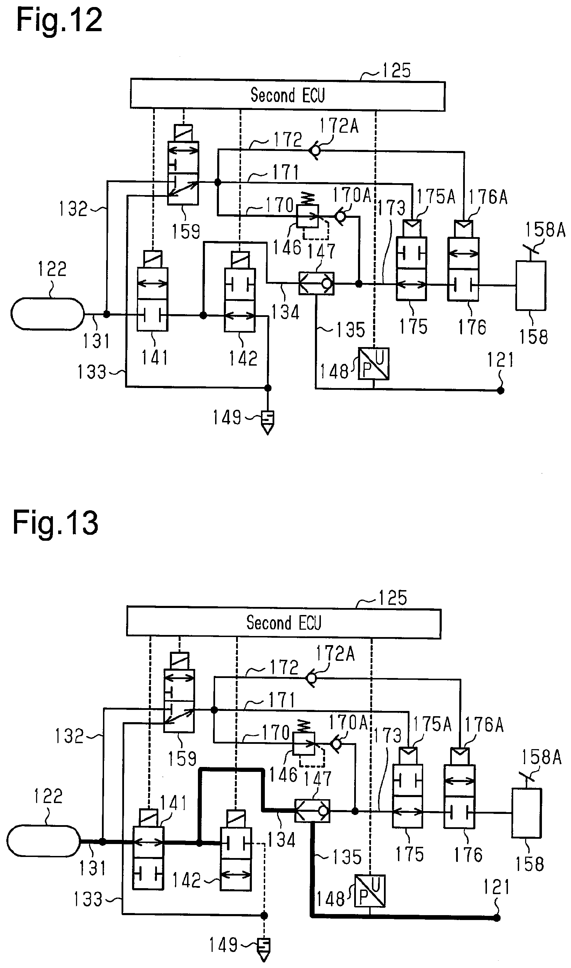

Referring to Figs. 12 to 15, a safety module 112 of a fourth embodiment of an air supply system is now described, focusing mainly on the differences from the third embodiment. The basic configuration of the air supply system of the present embodiment is equivalent to that of the third embodiment. In the drawings, the same reference numerals are given to those components that are substantially the same as the corresponding components of the third embodiment. Such components will not be described in detail.

In the present embodiment, components including the first control valve 141, the second control valve 142, the third control valve 159 connected to the second flow passage 132, which branches off from the first flow passage 131, and the double check valve 147 located between the fourth flow passage 134 and the fifth flow passage 135 are the same as those of the third embodiment. However, the configuration of the third control valve 159 and other parts differ from those of the third embodiment.

As shown in Fig, 12, the double check valve 147 is connected to the fourth flow passage 134, a ninth flow passage 173, and the fifth flow passage 135 and permits airflow to the fifth flow passage 135 from one of the fourth flow passage 134 and the ninth flow passage 173 that has a higher pressure.

The ninth flow passage 173 includes a first pneumatic control valve 175 and a second pneumatic control valve 176. The first and second pneumatic control valves 175 and 176 correspond to an opening and closing portion. The first pneumatic control valve 175, which is controlled by air pressure, is in the connection position, in which the first pneumatic control valve 175 opens the ninth flow passage 173, when no air pressure signal is input to its signal input port 175A. The first pneumatic control valve 175 is in the shutoff position, in which the first pneumatic control valve 175 shuts the ninth flow passage 173, when an air pressure signal is input to the signal input port 175A. The second pneumatic control valve 176 is in the shutoff position, in which the second pneumatic control valve 176 shuts the ninth flow passage 173, when no air pressure signal is input to its signal input port 176A, which is controlled by air pressure. The second pneumatic control valve 176 is in the connection position, in which the second pneumatic control valve 176 opens the ninth flow passage 173, when an air pressure signal is input to the signal input port 175A.

One end of the ninth flow passage 173 is connected to a brake valve 158. The brake valve 158 includes a brake pedal 158A, which is operated by a maintenance worker or the driver of the lead vehicle 100, for example, when an abnormality occurs in the main module 111 or the safety module 112. While the brake pedal 158A is not operated, no air is supplied to the ninth flow passage 173. When the brake pedal 158A is operated, air is supplied to the ninth flow passage 173 from the brake valve 158. In addition, the brake valve 158 is able to discharge the air supplied from the ninth flow passage 173.

The third control valve 159 is a three-port, two-position valve and connected to the second flow passage 132, the third flow passage 133, and the junction of sixth to eighth flow passages 170 to 172. When non-energized, the third control valve 159 is in the discharge position, in which the third control valve 159 connects the third flow passage 133 to the junction of the sixth to eighth flow passages 170 to 172. When energized, the third control valve 159 is in the supply position, in which the third control valve 159 connects the second flow passage 132 to the junction of the sixth to eighth flow passages 170 to 172.

A middle section of the sixth flow passage 170 includes a pressure reducing valve 146, and a check valve 170A is arranged downstream of the pressure reducing valve 146. The sixth flow passage 170 reduces the pressure of the air supplied through the third control valve 159 and sends it to the ninth flow passage 173. The check valve 170A permits airflow only from the pressure reducing valve 146 to the ninth flow passage 173. The seventh flow passage 171 is connected to the signal input port 175A of the first pneumatic control valve 175. The eighth flow passage 172 is connected to the signal input port 176A of the second pneumatic control valve 176. A middle section of the eighth flow passage 172 includes a check valve 172A, which permits airflow only from the third control valve 159 to the second pneumatic control valve 176.

Referring to Figs. 12 to 15, the operation of the safety module 112 is now described. When the main module 111 is in normal condition with no abnormality, the backup valve 111A is closed.

As shown in Fig. 12, under normal conditions, the first control valve 141, the second control valve 142, and the third control valve 159 are non-energized. The first control valve 141 is in the shutoff position, shutting the first flow passage 131. The third control valve 159 is in the discharge position, shutting the second flow passage 132. Consequently, no air is supplied from the suspension air tank 122 to the brake chamber 150 through the main module 111.

Referring to Fig. 13, the backup mode, which is enabled when an abnormality occurs in the main module 111, is now described. The backup mode is enabled while the parking brake is released.

The second ECU 25 energizes the first to third control valves 141, 142 and 159. This places the first control valve 141 in the connection position and the second control valve 142 in the shutoff position, in which the second control valve 142 shuts the discharge port 149. The third control valve 159 is placed in the discharge position, which the third control valve 159 shuts the upstream side of the second flow passage 132 and connects the third flow passage 133 to the junction of the sixth to eighth flow passages 170 to 172. This places the first pneumatic control valve 175 in the connection position and the second pneumatic control valve 176 in the shutoff position, shutting the ninth flow passage 173. Since the fourth flow passage 134 connected to the double check valve 147 has a higher pressure than the ninth flow passage 173, the double check valve 147 permits airflow from the fourth flow passage 134 to the fifth flow passage 135.

The air supplied from the suspension air tank 122 to the first flow passage 131 is thus supplied to the main module 111 through the fourth flow passage 134, the double check valve 147, and the fifth flow passage 135. The air supplied to the main module 111 is sent to the brake chamber 150 through the backup valve 111A, thereby applying the service brake.

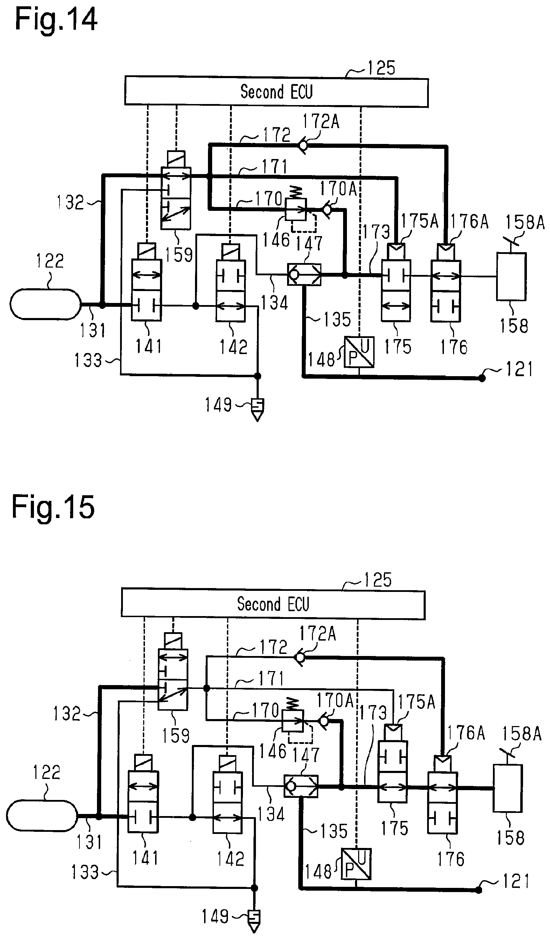

Referring to Fig. 14, the forced pressure-reduction brake mode is now described. In the forced pressure-reduction brake mode, the second ECU 25 de-energizes the first and second control valves 141 and 142 and energizes the third control valve 143. This places the first control valve 141 in the shutoff position, shutting the first flow passage 131. The third control valve 159 is in the supply position, connecting the second flow passage 132 to the junction of the sixth to eighth flow passages 170 to 172. The air supplied to the sixth flow passage 170 is decompressed and supplied to the ninth flow passage 173. Since the sixth flow passage 170 connected to the double check valve 147 has a higher pressure than the fourth flow passage 134, the double check valve 147 permits airflow from the sixth flow passage 170 to the fifth flow passage 135.

The air supplied from the suspension air tank 122 is thus supplied to the sixth flow passage 170 through the second flow passage 132 and the third control valve 159. The pressure reducing valve 146 reduces the pressure of the air supplied to the sixth flow passage 170 to a predetermined pressure. The predetermined pressure is set such that the brake pressure decelerates the vehicle without causing collisions with the vehicles in front and behind. The decompressed air is supplied to the main module 111 through the double check valve 147 and the fifth flow passage 135. The air supplied to the main module 111 is sent to the brake chamber 150 through the backup valve 111A, thereby applying the service brake.

Referring to Fig. 15, the re-driving mode is now described that is used to restart driving after the forced pressure-reduction brake is applied. In the re-driving mode, after the forced pressure-reduction brake is applied, the second ECU 25 maintains the first and second control valves 141 and 142 in the non-energized state and de-energizes the third control valve 159. This places the third control valve 159 in the discharge position, so that the air in the sixth to eighth flow passages 170 to 172 is discharged through the third flow passage 133 and the discharge port 149. Since the eighth flow passage 172 includes the check valve 172A, the air in the section between the check valve 172A and the third control valve 159 is discharged, but the section between the check valve 172A and the second pneumatic control valve 176 is filled with air. As such, the first pneumatic control valve 175 is moved to the connection position, and the second pneumatic control valve 176 remains in the connection position. The ninth flow passage 173 thus provides communication between the brake valve 158 and the fifth flow passage 135 through the double check valve 147.

In the sixth flow passage 170, the air in the section between the check valve 170A and the third control valve 159 is discharged, but the section between the check valve 172A and the double check valve 147 is filled with air. Thus, the sixth flow passage 170 has a higher pressure than the fourth flow passage 134, so that the double check valve 147 permits airflow from the fifth flow passage 135 to the ninth flow passage 173. As a result, the air filled in the first control chamber 151 of the brake chamber 150 is discharged through the main-side port 121, the fifth flow passage 135, and the ninth flow passage 173 and from the brake valve 158. This allows the following vehicle 101 to move to a maintenance station or a safe place such as a service area.

To apply the service brake, the driver operates the brake pedal 158A, and the air supplied from the brake valve 158 is supplied to the ninth flow passage 173, the double check valve 147, and the fifth flow passage 135. Air is thus supplied to the first control chamber 151 of the brake chamber 150 through the main-side port 121, thereby applying the service brake.

As described above, the present embodiment has the following advantage as well as the advantages (6) and (7).
(9) When the first and second pneumatic control valves 175 and 176 are opened, air is discharged from the brake chamber 150 to the brake valve 158, thus releasing the service brake even after the service brake is forcibly applied.

### Sixth Embodiment

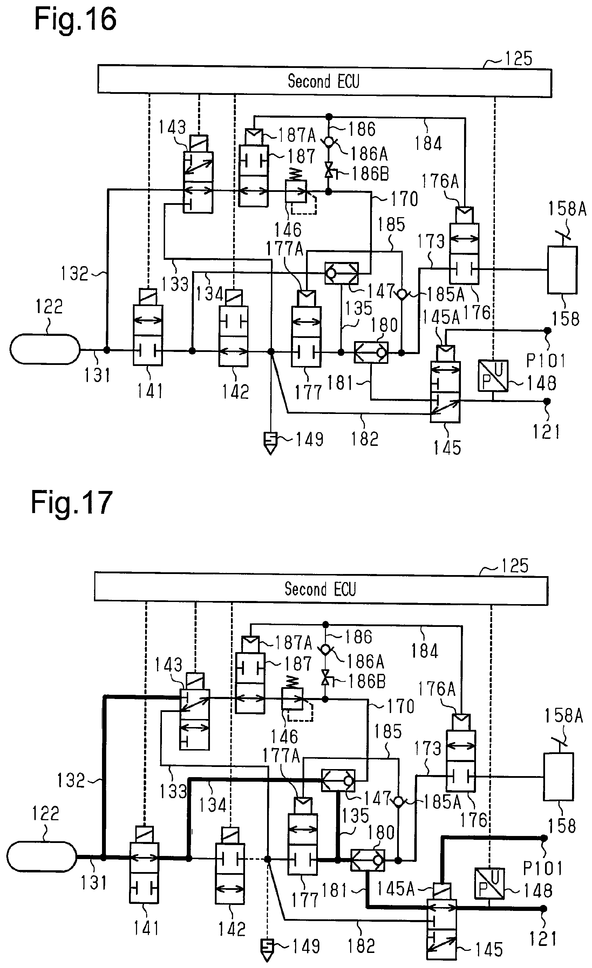

Referring to Figs. 16 to 21, a safety module 112 of a fifth embodiment of an air supply system is now described, focusing mainly on the differences from the third embodiment. The basic configuration of the air supply system of the present embodiment is equivalent to that of the third embodiment. In the drawings, the same reference numerals are given to those components that are substantially the same as the corresponding components of the third embodiment. Such components will not be described in detail.

In the present embodiment, components including the first control valve 141, the second control valve 142, the third control valve 143 connected to the second flow passage 132, which branches off from the first flow passage 131, the double check valve 147 between the fourth flow passage 134 and the fifth flow passage 135, and the direction switching valve 145 are the same as those of the third embodiment. However, other components, such as a valve system arranged between the second control valve 142 and the direction switching valve 145 and a valve system arranged between the third control valve 143 and the direction switching valve 145, differ from those of the third embodiment.

The direction switching valve 145 is connected to the discharge port 149 by a 112th flow passage 182. The first flow passage 131 includes a third pneumatic control valve 177 on the downstream side of the second control valve 142. The third pneumatic control valve 177 is in the shutoff position, in which the third pneumatic control valve 177 shuts the first flow passage 131, when no air pressure signal is input to its signal input port 177A, and is in the connection position, in which the third pneumatic control valve 177 opens the first flow passage 131, when an air pressure signal is input to the signal input port 177A.

A double check valve 180 is arranged downstream of the third pneumatic control valve 177. The double check valve 180 is connected to the first flow passage 131, the ninth flow passage 173, and a 111th flow passage 181 and permits airflow to the 111th flow passage 181 from one of the first flow passage 131 and the ninth flow passage 173 that has a higher pressure. The 111th flow passage 181 is connected to the direction switching valve 145. The signal input port 177A of the third pneumatic control valve 177 is connected by a bypass flow passage 185 to a section of the ninth flow passage 173 downstream of the double check valve 180. A middle section of the ninth flow passage 173 includes a check valve 185A. The check valve 185A permits airflow only from the ninth flow passage 173 to the signal input port 177A.

The ninth flow passage 173 connected to the brake valve 158 includes a second pneumatic control valve 176. The second pneumatic control valve 176, which serves as a second on-off valve, is the same as that of the fourth embodiment. That is, the second pneumatic control valve 176 is in the shutoff position, in which the second pneumatic control valve 176 shuts the ninth flow passage 173, when no air pressure signal is input to its signal input port 176A, which is controlled by air pressure. The second pneumatic control valve 176 is in the connection position, in which the second pneumatic control valve 176 opens the ninth flow passage 173, when an air pressure signal is input to the signal input port 176A.

The signal input port 176A of the second pneumatic control valve 176 is connected to a signal input port 187A of a fourth pneumatic control valve 187, which serves as a first on-off valve, by a 114th flow passage 184, which serves as a port connection flow passage. The 114th flow passage 184 is connected to the sixth flow passage 170 by a bypass flow passage 186. The bypass flow passage 186 includes a check valve 186A and a manual on-off valve 186B. When the sixth flow passage 170 is on the upstream side of the bypass flow passage 186 and the 114th flow passage 184 is on the downstream side, the on-off valve 186B is upstream of the check valve 186A. The check valve 186A permits airflow only from upstream to downstream.

The third control valve 143 is connected to the sixth flow passage 170, and a middle section of the sixth flow passage 170 includes a pressure reducing valve 146. The fourth pneumatic control valve 187 is located between the third control valve 143 and the pressure reducing valve 146. The fourth pneumatic control valve 187 is a two-position valve controlled by air pressure and is in the connection position, in which the fourth pneumatic control valve 187 opens the sixth flow passage 170, when no air pressure signal is input to its signal input port 187A. The fourth pneumatic control valve 187 is in the shutoff position, in which the fourth pneumatic control valve 187 shuts the sixth flow passage 170, when an air pressure signal is input to the signal input port 187A.

The end of the sixth flow passage 170 that is opposite to the end connected to the third control valve 143 is connected to the double check valve 147. The double check valve 147 is connected to the fourth flow passage 134, the sixth flow passage 170, and the fifth flow passage 135.

Referring to Figs. 16 to 21, the operation of the safety module 112 is now described. When the main module 111 is in normal condition with no abnormality, the backup valve 111A is closed.

As shown in Fig. 16, under normal conditions, the first and second control valves 141 and 142 are non-energized and the third control valve 143 is energized. The first control valve 141 is in the shutoff position, shutting the first flow passage 131. The second control valve 142 is in the connection position, and the third control valve 143 is in the discharge position, shutting also the second flow passage 132. Consequently, no air is supplied from the suspension air tank 122 to the brake chamber 150 through the main module 111.

Referring to Fig. 17, the backup mode, which is enabled when an abnormality occurs in the main module 111, is now described. The backup mode is enabled while the parking brake is released.

When receiving a deceleration command from the master ECU 61, the second ECU 25 energizes the first to third control valves 141 to 143. This places the first control valve 141 in the connection position and the second control valve 142 in the shutoff position, in which the second control valve 142 shuts the discharge port 149. The third control valve 143 is placed in the discharge position, in which the third control valve 143 shuts the upstream side of the second flow passage 132 and connects the sixth flow passage 170 to the third flow passage 133. As such, the first flow passage 131 and the fourth flow passage 134 are filled with air, allowing the fourth flow passage 134 to have a higher pressure than the sixth flow passage 170. The double check valve 147 thus permits airflow from the fourth flow passage 134 to the fifth flow passage 135. In addition, no air is supplied from the brake valve 158, allowing the fifth flow passage 135 to have a higher pressure than the ninth flow passage 173. The double check valve 180 thus permits airflow from the fifth flow passage 135 to the 111th flow passage 181.

While the parking brake is released, such as when the vehicle is traveling, air is supplied to the signal input port 145A of the direction switching valve 145 from the parking brake port P101, placing the direction switching valve 145 in the supply position. The air supplied through the double check valve 180 is supplied to the main module 111 through the 111th flow passage 181 and the direction switching valve 145. The air supplied to the main module 111 is sent to the brake chamber 150 through the backup valve 111A, thereby applying the service brake.

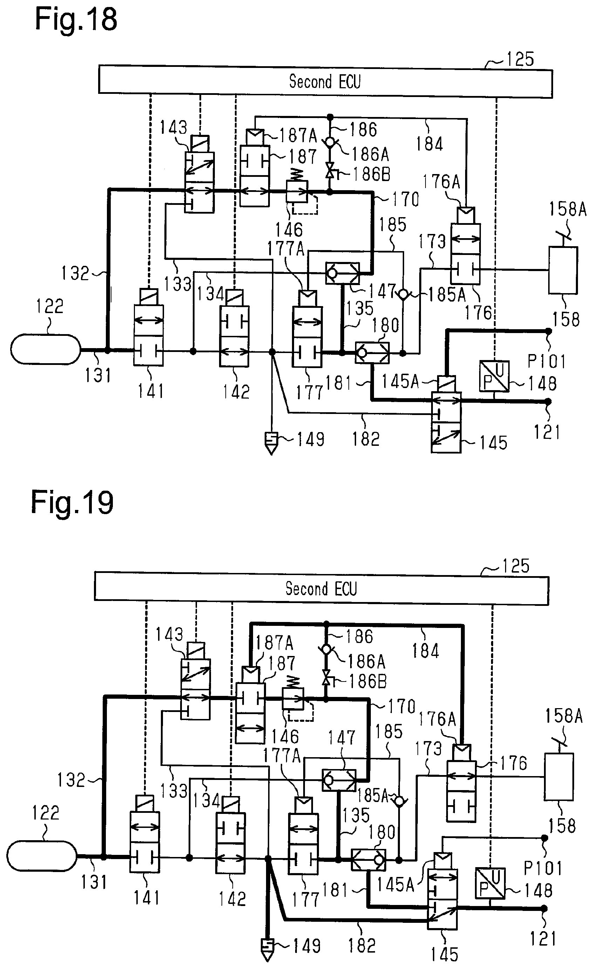

Referring to Fig. 18, the forced pressure-reduction brake mode is now described. In the forced pressure-reduction brake mode, the second ECU 25 de-energizes the first to third control valves 141 to 143. This places the first control valve 141 in the shutoff position, shutting the first flow passage 131. The second control valve 142 is in the connection position, discharging the air in the fourth flow passage 134. The third control valve 143 is in the supply position, in which the third control valve 143 connects the second flow passage 132 to the sixth flow passage 170. Thus, the sixth flow passage 170 has a higher pressure than the fourth flow passage 134, so that the double check valve 147 permits airflow from the sixth flow passage 170 to the fifth flow passage 135. The air supplied to the sixth flow passage 170 is decompressed by the pressure reducing valve 146 and supplied to the fifth flow passage 135.

In addition, no air is supplied from the brake valve 158, allowing the fifth flow passage 135 to have a higher pressure than the ninth flow passage 173. The double check valve 180 thus permits airflow from the fifth flow passage 135 to the 111th flow passage 181. Further, air is supplied to the signal input port 145A of the direction switching valve 145 from the parking brake port P101, placing the direction switching valve 145 in the supply position. The air supplied through the double check valve 180 is supplied to the main module 111 through the 111th flow passage 181 and the direction switching valve 145. The air supplied to the main module 111 is sent to the brake chamber 150 through the backup valve 111A, thereby applying the service brake with a reduced brake pressure.

Referring to Figs. 19 to 21, the re-driving mode is now described that is used to restart driving after the forced pressure-reduction brake is applied.

As shown in Fig. 19, in the re-driving mode, the second ECU 25 maintains the first to third control valves 141 to 143 in the non-energized state after the forced pressure-reduction brake is applied. A maintenance worker or the driver of the lead vehicle 100, for example, manually opens the manual on-off valve 186B. This provides communication between the sixth flow passage 170 and the 114th flow passage 184 through the bypass flow passage 186. As such, air is supplied to the fourth flow passage 134 from the sixth flow passage 170, which is filled with air. This results in an air pressure signal being input to the signal input port 187A of the fourth pneumatic control valve 187, placing the fourth pneumatic control valve 187 in the shutoff position. In addition, when an air pressure signal is input to the signal input port 176A of the second pneumatic control valve 176, the second pneumatic control valve 176 is placed in the connection position.

Further, the parking brake system is activated, so that air is discharged from the parking brake port P101, placing the direction switching valve 145 in the discharge position. This shuts the 111th flow passage 181 and discharges air from the brake chamber 150 through the main module 111, thereby releasing the service brake.

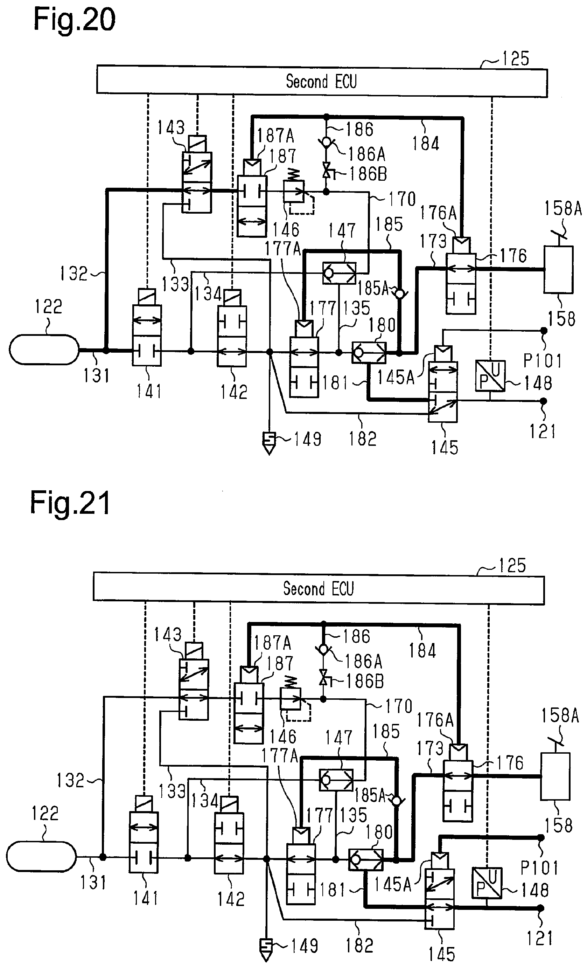

As shown in Fig. 20, the maintenance worker or the driver then closes the manual on-off valve 186B and depresses the brake pedal 158A once. The air thus supplied from the brake valve 158 flows through the second pneumatic control valve 176 in the connection position to the bypass flow passage 185, so that the signal input port 177A of the third pneumatic control valve 177 is filled with air. This places the third pneumatic control valve 177 in the connection position and discharges the air in the section between the double check valve 180 and the third pneumatic control valve 177 from the discharge port 149. The double check valve 180 thus permits airflow from the ninth flow passage 173 to the 111th flow passage 181.

As shown in Fig. 21, the parking brake is then released, so that air is supplied from the parking brake port P101, placing the direction switching valve 145 in the supply position. As a result, air is supplied from the brake valve 158 to the main-side port 121 through the double check valve 180, the 111th flow passage 181, and the direction switching valve 145. The air supplied to the main module 111 is then sent to the brake chamber 150 through the backup valve 111A, applying the service brake. As such, operation of the brake pedal 158A decelerates the vehicle even after the forced pressure-reduction brake is applied. This allows the following vehicle 101 to move to a maintenance station or a safe place such as a service area.

As described above, the present embodiment has the following advantage as well as the advantages (6) to (8).
(10) In the configuration described above, operating the manually-operated on-off valve 186B allows the bypass flow passage 186 to be filled with air, thereby opening the fourth pneumatic control valve 187 and placing the second pneumatic control valve 176 in the connection position. This enables releasing of the service brake that has been forcibly applied.

### Sixth Embodiment

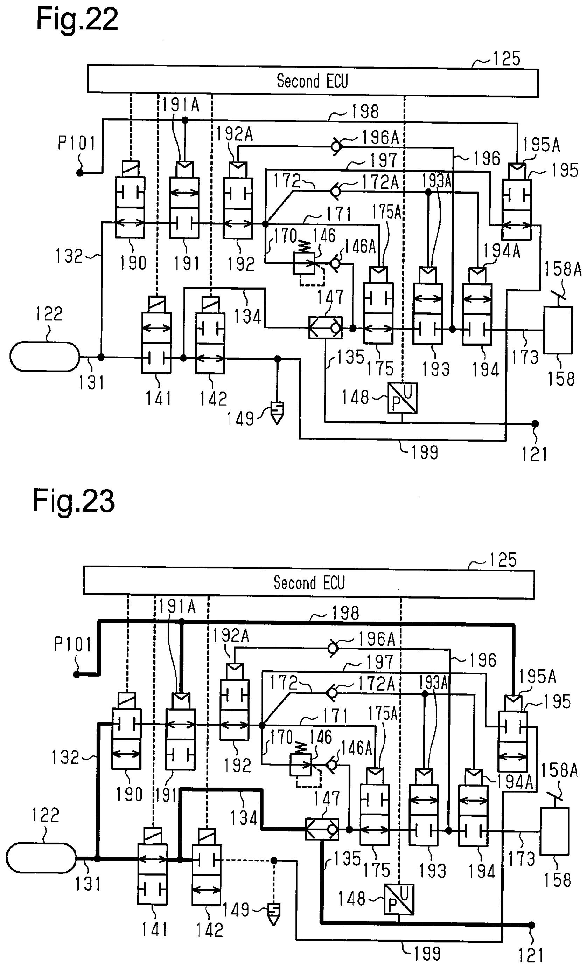

Referring to Figs. 22 to 25, a safety module 112 of a sixth embodiment of an air supply system is now described, focusing mainly on the differences from the third embodiment The basic configuration of the air supply system of the present embodiment is equivalent to that of the third embodiment. In the drawings, the same reference numerals are given to those components that are substantially the same as the corresponding components of the third embodiment. Such components will not be described in detail.

In the present embodiment, components including the first control valve 141, the second control valve 142, and the double check valve 147 located between the fourth flow passage 134 and the fifth flow passage 135 are the same as those in the third embodiment. Unlike the third embodiment, however, the present embodiment includes components such as a third control valve 190 and sixth to tenth pneumatic control valves 191 to 195.

As shown in Fig. 22, the second flow passage 132 includes the third control valve 190, the sixth pneumatic control valve 191, and the seventh pneumatic control valve 192. The third control valve 190 is an electromagnetic valve controlled by the second ECU 25 and is in the connection position, in which the third control valve 190 opens the second flow passage 132, when non-energized, and is in the shutoff position, in which the third control valve 190 shuts the second flow passage 132, when energized.

The sixth pneumatic control valve 191, which is controlled by air pressure signals, is in the shutoff position, in which the sixth pneumatic control valve 191 shuts the second flow passage 132, when no air pressure signal is input to its signal input port 191A, and is in the connection position, in which the sixth pneumatic control valve 191 opens the second flow passage 132, when an air pressure signal is input. The signal input port 191A is connected to an eighteenth flow passage 198 connected to the parking brake port P101. The end of the eighteenth flow passage 198 that is opposite to the parking brake port P101 is connected to the signal input port 195A of the tenth pneumatic control valve 195. When no air pressure signal is input to the signal input port 195A, the tenth pneumatic control valve 195 is in the connection position, in which the tenth pneumatic control valve 195 provides communication between a 117th flow passage 197 and the discharge port 149 through a nineteenth flow passage 199. When an air pressure signal Is input to the signal input port 195A, the tenth pneumatic control valve 195 is in the shutoff position, in which the tenth pneumatic control valve 195 shuts the nineteenth flow passage 199.

The seventh pneumatic control valve 192, which is controlled by air pressure signals, is in the connection position, in which the seventh pneumatic control valve 192 opens the second flow passage 132, when no air pressure signal is input to its signal input port 192A, and is in the shutoff position, in which the seventh pneumatic control valve 192 shuts the second flow passage 132, when an air pressure signal is input. The signal input port 192A is connected to a 116th flow passage 196, which is connected to the ninth flow passage 173. A middle section of the 116th flow passage 196 includes a check valve 196A, which permits airflow only from the ninth flow passage 173.

The second flow passage 132 is connected to the junction of the sixth flow passage 170, the seventh flow passage 171, the eighth flow passage 172, and the 117th flow passage 197. The end of the sixth flow passage 170 that is opposite to the end connected to the second flow passage 132 is connected to the ninth flow passage 173. The seventh flow passage 171 is connected to the signal input port 175A of the first pneumatic control valve 175 arranged in the ninth flow passage 173. The eighth flow passage 172 is connected to the signal input port 193A of the eighth pneumatic control valve 193 and the signal input port 194A of the ninth pneumatic control valve 194, which are arranged in the ninth flow passage 173.

The eighth pneumatic control valve 193 is in the shutoff position, in which the eighth pneumatic control valve 193 shuts the ninth flow passage 173, when no air pressure signal is input to its signal input port 193A, and is in the connection position, in which the eighth pneumatic control valve 193 opens the ninth flow passage 173, when an air pressure signal is input.

The ninth pneumatic control valve 194 is in the shutoff position, in which the ninth pneumatic control valve 194 shuts the ninth flow passage 173, when no air pressure signal is input to its signal input port 194A, and is in the connection position, in which the ninth pneumatic control valve 194 opens the ninth flow passage 173, when an air pressure signal is input. The 117th flow passage 197 connects the seventh pneumatic control valve 192 to the tenth pneumatic control valve 195.

Referring to Figs. 22 to 25, the operation of the safety module 112 is now described. When the main module 111 is in normal condition with no abnormality, the backup valve 111A is closed.

As shown in Fig. 22, under normal conditions, the first and second control valves 141 and 142 are non-energized and the third control valve 190 is energized. The first control valve 141 is in the shutoff position, shutting the first flow passage 131. The third control valve 190 is in the shutoff position, shutting the second flow passage 132. As such, no air is supplied from the suspension air tank 122 to the brake chamber 150 through the main module 111, avoiding interference with the operation of the main module 111.

Referring to Fig. 23, the backup mode, which is enabled when an abnormality occurs in the main module 111, is now described. In the backup mode, the safety module 112 controls the service brake in place of the main module 111.

The second ECU 25 receives a deceleration command from the master ECU 61. At this time, the backup valve 111A of the main module 111 is opened.

In response to the deceleration command, the second ECU 25 energizes the first control valve 141, the second control valve 142, and the third control valve 190. This places the first control valve 141 in the connection position and the second control valve 142 in the shutoff position, in which the second control valve 142 shuts the discharge port 149. The third control valve 190 is in the shutoff position, in which the third control valve 190 shuts the second flow passage 132. This allows the fourth flow passage 134, which is connected to the double check valve 147, to have a higher pressure than the sixth flow passage 170, so that the double check valve 147 permits airflow from the fourth flow passage 134 to the fifth flow passage 135.

The air supplied from the suspension air tank 122 to the first flow passage 131 is thus supplied to the main module 111 through the fourth flow passage 134, the double check valve 147, and the fifth flow passage 135. The air supplied to the main module 111 is sent to the brake chamber 150 through the backup valve 111A, thereby applying the service brake.

To release the service brake, the second ECU 25 de-energizes the first to third control valves 141 to 190. This places the first control valve 141 in the shutoff position, stopping supply of air from the suspension air tank 122. The second control valve 142 is in the connection position. Thus, the air in the brake chamber 150 is discharged from the discharge port 149 through the main-side port 121, the fourth flow passage 134, and the second control valve 142.

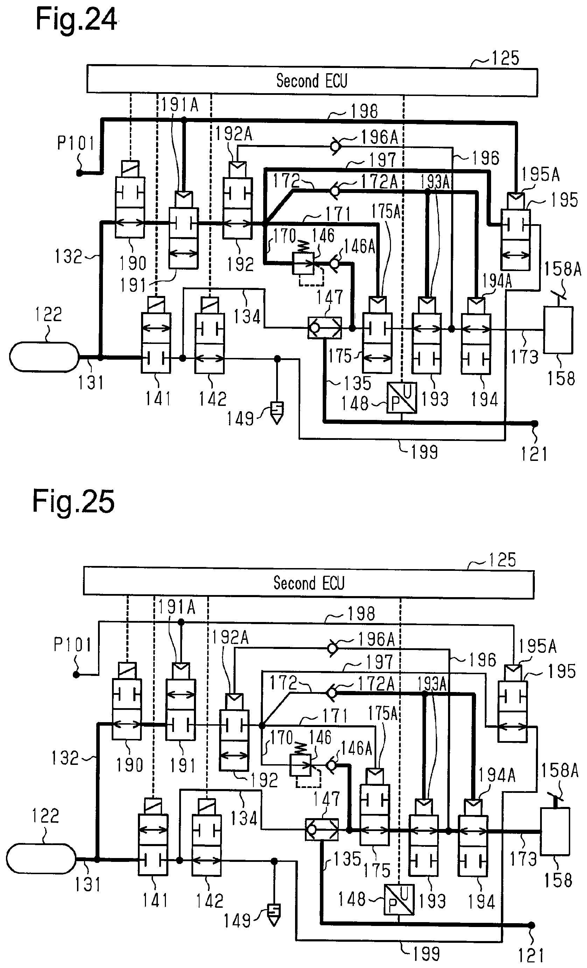

Referring to Fig. 24, the forced pressure-reduction brake mode is now described. In the forced pressure-reduction brake mode, the second ECU 25 de-energizes the first control valve 141, the second control valve 142, and the third control valve 190. The first control valve 141 is in the shutoff position, shutting the first flow passage 131. The second control valve 142 is in the connection position, providing communication between the fourth flow passage 134 and the discharge port 149. The third control valve 190 is placed in the connection position, opening the second flow passage 132. Before the forced pressure-reduction brake is applied, that is, while the vehicle is traveling, air is supplied to the parking brake port P101, causing an air pressure signal to be input to the signal input port 191A of the sixth pneumatic control valve 191. This places the sixth pneumatic control valve 191 in the connection position.

The seventh pneumatic control valve 192 remains in the connection position. The air in the suspension air tank 122 is thus supplied to the sixth flow passage 170, the seventh flow passage 171, the eighth flow passage 172, and the 117th flow passage 197 through the second flow passage 132. Supplying air to the seventh flow passage 171 places the first pneumatic control valve 175 in the shutoff position. In addition, the tenth pneumatic control valve 195 is in the shutoff position, preventing air in the suspension air tank 122 from being discharged through the 117th flow passage 197. Air in the suspension air tank 122 is thus supplied to the brake chamber 150 through the second flow passage 132, the sixth flow passage 170, and the main-side port 121, thereby applying the service brake. The pressure of air supplied through the sixth flow passage 170 is reduced by the pressure reducing valve 146, reducing the brake pressure.

Referring to Fig. 25, the re-driving mode is now described that is used to restart driving after the forced pressure-reduction brake is applied.

To restart driving, the parking brake is applied by depressing the brake pedal 158A of the brake valve 158 once, for example. No air is thus supplied to the parking brake port P101, placing the sixth pneumatic control valve 191 in the shutoff position. This shuts the second flow passage 132.

The section of the eighth flow passage 172 downstream of the check valve 172A is filled with air, placing the eighth pneumatic control valve 193 and the ninth pneumatic control valve 194 in their connection positions. The ninth flow passage 173 is thus connected to the fifth flow passage 135 through the double check valve 147. Accordingly, the air discharged from the brake chamber 150 and sent through the main-side port 121 is discharged through the fifth flow passage 135 and the double check valve 147 and from the brake valve 158. When the parking brake is released in the parking brake system, the following vehicle 101 is able to travel.

As described above, the present embodiment has the following advantage as well as the advantages (6) and (7).
(11) In the forced pressure-reduction brake mode, the configuration described above opens the eighth pneumatic control valve 193 and the ninth pneumatic control valve 194, which connect the brake valve 158 to the brake chamber 150. The seventh flow passage 171, which is connected to the signal input ports 193A and 194A of the eighth and ninth pneumatic control valves 193 and 194, includes the check valve 172A, which maintains the air in the signal input ports 193A and 194A. It is thus possible to maintain the connection between the brake valve 158 and the brake chamber 150, allowing air to be discharged from the brake chamber 150 to the brake valve 158. The service brake is thus released.

### Seventh Embodiment

A safety air supply system has been devised that, when an abnormality occurs in another air supply system, supplies air to the brake mechanism in place of the faulty air supply system. However, even if an air supply system is duplexed as such, consideration is not given to the control of brakes in the event of abnormalities in both of the air supply systems. Further improvement is desired in the safety function of pneumatic brake systems. The air supply system of the present embodiment improves the safety of pneumatic brake systems.

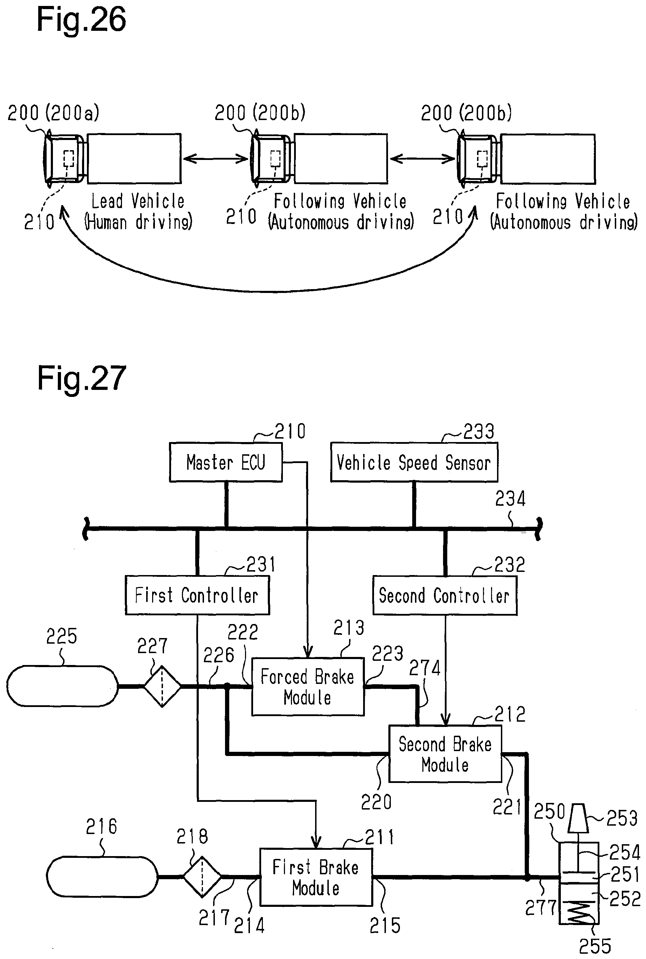

Referring to Figs. 26 to 34, one embodiment of an air supply system is described that is used in a pneumatic brake system installed in a vehicle for platoon driving. The pneumatic brake system applies and releases the parking brake and the service brake.

Referring to Fig. 26, platoon driving is now described. In platoon driving, vehicles 200, such as trucks with integral cargo platforms (cargo vehicles), form a platoon. The vehicles 200 include a lead vehicle 200a, which is driven by a driver, and autonomous following vehicles 200b. Each vehicle 200 includes a master electronic control unit (ECU) 210, which serves as a main controller controlling the platoon driving. The master ECU 210 of the lead vehicle 200a and the master ECUs 210 of the following vehicles 200b wirelessly transmit and receive various types of information and travel while maintaining a fixed distance between one another. The lead vehicle 200a applies brakes in response to braking by the driver, and each following vehicle 200b applies brakes following deceleration of the vehicle 200 immediately in front. Since the lead vehicle 200a is controlled by a driver, the pneumatic brake system of the lead vehicle 200a does not have to be the same in configuration as the pneumatic brake systems of the following vehicles 200b, but the same configuration may be used. In the present embodiment, the pneumatic brake system of the lead vehicle 200a and the pneumatic brake systems of the following vehicles 200b have the same configuration. Fig. 26 shows a platoon including three vehicles 200, but the platoon may include any multiple number of vehicles 200.

Referring to Fig. 27, the schematic configuration of the brake system of each vehicle 200 is now described. Each vehicle 200 includes a first brake module 211, which serves as a first air supply portion, a second brake module 212, which serves as a second air supply portion, and a forced brake module 213, which serves as a forced brake portion. A first brake module 211 is provided for each wheel of the vehicle 200. A second brake module 212 is also provided for each wheel. A forced brake module 213 is connected to a plurality of second brake modules 212. Fig. 26 only shows the first brake module 211 and the second brake module 212 provided for one of the wheels. The first brake modules 211 and the second brake modules 212 for the other wheels are not shown.

The first brake module 211 operates under normal conditions. That is, unless an abnormality occurs in the first brake module 211, the first brake module 211 operates with priority over the second brake module 212. The second brake module 212 operates under emergency conditions in which the first brake module 211 is inoperative.

The first brake module 211 includes an input port 214 connected to a brake air tank 216 by a passage 217. The passage 217 includes a filter 218, which dries the compressed air stored in the brake air tank 216. The first brake module 211 includes an output port 215 connected to a brake chamber 250 by a chamber connection line 277.

The brake chamber 250 includes a first control chamber 251, which controls the service brake, and a second control chamber 252, which controls the parking brake. The brake chamber 250 includes a spring 255 and a push rod 254, which includes a wedge 253 at the tip. The spring 255 exerts an urging force that urges the push rod 254 such that the wedge 253 is moved toward the brake lining (not shown) on the wheel. Air in the brake air tank 216 is supplied to the first control chamber 251. The amount of the supplied air depends on the degree the brake pedal is operated by the driver. When air is supplied to the first control chamber 251, the air pressure in the first control chamber 251 moves the push rod 254 toward the wheel. The wedge 253 at the tip of the push rod 254 is inserted into and presses the brake lining outward, and the friction between the brake shoes and the brake lining applies the service brake. When air is discharged from the first control chamber 251, the wedge 253 is retracted from the brake lining, releasing the service brake. When air is discharged from the second control chamber 252, the spring 255 expands and moves the push rod 254 toward the wheel. The wedge 253 presses the brake lining on the wheel outward, applying the parking brake. When air is supplied to the second control chamber 252, the spring 255 is compressed, retracting the wedge 253 from the brake lining. This releases the parking brake.

The output port 215 of the first brake module 211 is connected to the first control chamber 251 of the brake chamber 250. The brake chamber 250, which has the second control chamber 252, is arranged in each rear wheel of the vehicle 200. Each front wheel of the vehicle 200 includes a brake chamber (not shown), which includes a first control chamber 251, a push rod 254, and a wedge 253. The first and second brake modules 211 and 212 also supply and discharge air to and from this brake chamber, which applies and releases the service brake.

The second brake module 212 has an input port 220, which is connected to a suspension air tank 225 by a passage 226. The suspension air tank 225 serves as an air supply source provided in the air suspension (suspension system) of the vehicle 200. The passage 226 includes a filter 227, which dries the compressed air stored in the suspension air tank 225. The second brake module 212 includes an output port 221 connected to the first control chamber 251 of the brake chamber 250 by the chamber connection line 277.

The forced brake module 213 includes an input port 222 connected to the suspension air tank 225 by the passage 226. The forced brake module 213 includes an output port 223 connected to the second brake module 212 by an air pressure signal line 274. The air pressure signal line 274 is used to output an air pressure signal (pilot pressure) to the second brake module 212.

The first brake module 211 is controlled by a first controller 231, and the second brake module 212 is controlled by a second controller 232. The forced brake module 213 is controlled by a master ECU 210. The master ECU 210, the first controller 231, and the second controller 232 are connected to an on-board network 234, such as the controller area network (CAN), and are capable of sending and receiving various types of information. The master ECU 210 receives vehicle information from a vehicle speed sensor 233 and other sensors and sends commands to the first and second controllers 231 and 232. The first and second controllers 231 and 232 execute various operations according to commands from the master ECU 210.

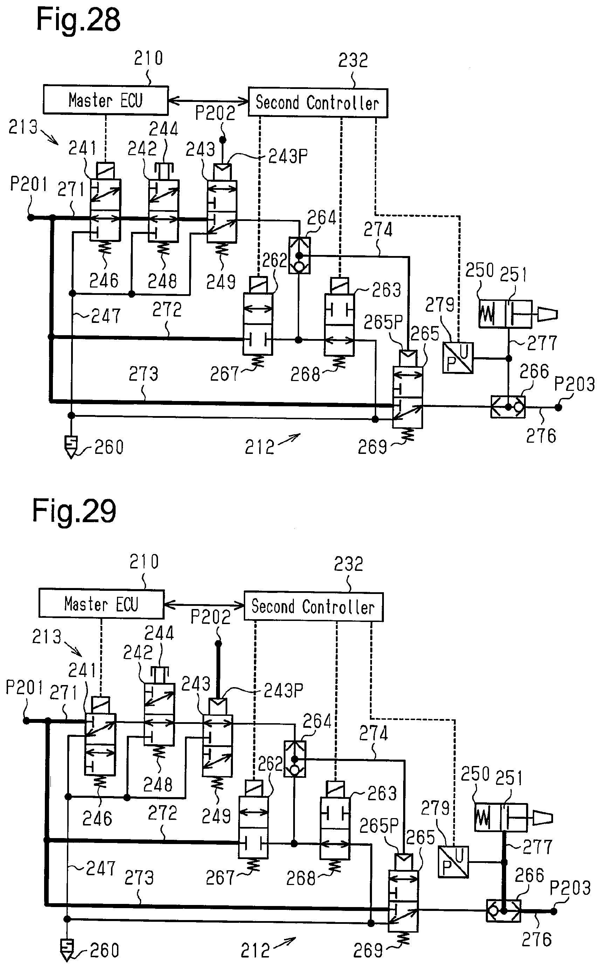

Referring to Fig. 28, the schematic configurations of the forced brake module 213 and the second brake module 212 are now described. Fig. 28 shows a second brake module 212 provided for one wheel and a forced brake module 213 connected to this second brake module 212. The second brake module 212 provided for each wheel allows individual adjustment of the braking force for the wheel. The solid lines indicate air lines, and the broken lines indicate electric signal lines. The bold solid lines indicate air lines that are filled with air.

The forced brake module 213 includes a first electromagnetic control valve 241, a forced-brake release valve 242, and an air pressure control valve 243. These valves are arranged in a first passage 271 connected to the suspension air tank 225. The first passage 271 is connected to the suspension air tank 225 through a port P201.

The first electromagnetic control valve 241 is a three-port, two-position valve, which is connected to the upstream side of the first passage 271, a discharge line 247 connected to a discharge port 260 for discharging air in the circuit, and the downstream side of the first passage 271. The position of the first electromagnetic control valve 241, which is controlled by the master ECU 210, is switchable between the connection position, in which the first electromagnetic control valve 241 opens the first passage 271, and the discharge position, in which the first electromagnetic control valve 241 shuts the section of the first passage 271 upstream of the first electromagnetic control valve 241 and connects the section of the first passage 271 downstream of the first electromagnetic control valve 241 to the discharge line 247. The first electromagnetic control valve 241 is configured to be placed in the connection position by the urging force of a valve spring 246. The first electromagnetic control valve 241 is in the connection position when non-energized and in the discharge position when energized.

The forced-brake release valve 242 is a three-port, two-position valve, which is arranged between the first electromagnetic control valve 241 and the air pressure control valve 243, and is connected to the first section of the first passage 271 that is connected to the first electromagnetic control valve 241, the discharge line 247, and the second section of the first passage 271 that is connected to the air pressure control valve 243. The forced-brake release valve 242 is configured such that its position is switchable between the connection position, in which the forced-brake release valve 242 opens the first passage 271, and the discharge position, in which the forced-brake release valve 242 shuts the first section of the first passage 271 and connects the second section of the first passage 271 to the discharge line 247. The forced-brake release valve 242 is configured to be placed in the connection position by the urging force of a valve spring 248. Further, the forced-brake release valve 242 has an operation portion 244, which is manually operated. The forced-brake release valve 242 is in the connection position when the operation portion 244 is not manually operated, and is placed in the discharge position when the operation portion 244 is manually operated.

The air pressure control valve 243 is a three-port, two-position valve, which is controlled by air pressure signals and connected to the second section of the first passage 271, the discharge line 247, and the third section of the first passage 271 that is downstream of the air pressure control valve 243. The air pressure control valve 243 is configured such that its position is switchable between the discharge position, in which the air pressure control valve 243 shuts the second section of the first passage 271 and connects the third section of the first passage 271 to the discharge line 247, and the connection position, in which the air pressure control valve 243 opens the first passage 271. The air pressure control valve 243 includes a signal input port 243P connected to the second control chamber 252 of the brake chamber 250 through a port P202. No air pressure signal is input to the signal input port 243P when air is discharged from the second control chamber 252 and the parking brake is applied. An air pressure signal is input to the signal input port 243P when air is supplied to the second control chamber 252 and the parking brake is applied. The air pressure control valve 243 is configured to be placed in the discharge position by the urging force of a valve spring 249. The air pressure control valve 243 is in the discharge position when no air pressure signal is input to the signal input port 243P, and is in the connection position when an air pressure signal is input.

Next, the second brake module 212 is described. The second brake module 212 includes a second electromagnetic control valve 262, a third electromagnetic control valve 263, a first shuttle valve 264, a relay valve 265, and a second shuttle valve 266.

The second electromagnetic control valve 262 and the third electromagnetic control valve 263 are arranged in a second passage 272. The second passage 272 has a first end connected to the suspension air tank 225 and a second end connected to the discharge line 247. The second electromagnetic control valve 262, which is controlled by the second controller 232, is configured such that its position is switchable between the shutoff position, in which the second electromagnetic control valve 262 shuts the second passage 272, and the connection position, in which the second electromagnetic control valve 262 opens the second passage 272. The second electromagnetic control valve 262 is placed in the shutoff position by the urging force of a valve spring 267 when non-energized, and is in the connection position when energized.

The third electromagnetic control valve 263, which is controlled by the second controller 232, is configured such that its position is switchable between the connection position, in which the third electromagnetic control valve 263 opens the second passage 272, and the shutoff position, in which the third electromagnetic control valve 263 shuts the second passage 272. The third electromagnetic control valve 263 is placed in the connection position by the urging force of a valve spring 268 when non-energized, and is in the shutoff position when energized.

The first passage 271 is connected to the second passage 272 through the first shuttle valve 264. The first shuttle valve 264 is connected to the first passage 271, the second passage 272, and the air pressure signal line 274 and permits airflow to the air pressure signal line 274 from one of the first passage 271 and the second passage 272 that has a higher pressure.

The air pressure signal line 274 is connected to the signal input port 265P of the relay valve 265. The relay valve 265 is connected to the upstream side of a third passage 273, the discharge line 247, and the downstream side of the third passage 273. The third passage 273 branches off from the first passage 271 on the downstream side of the suspension air tank 225. The third passage 273 has a first end connected to the suspension air tank 225 and a second end connected to a first module connection line 276, which is connected to the first brake module 211. When no air pressure signal is input, the relay valve 265 is placed in the discharge position by the urging force of a valve spring 269, thereby discharging the air in the section of the third passage 273 downstream of the relay valve 265 and shutting the upstream section of the third passage 273. When an air pressure signal is input to the signal input port 265P, the relay valve 265 is placed in the connection position, in which the relay valve 265 opens the third passage 273.

The section of the third passage 273 downstream of the relay valve 265 includes the second shuttle valve 266. The second shuttle valve 266 is connected to the third passage 273, the first module connection line 276, and a chamber connection line 277. The second shuttle valve 266 permits airflow to the chamber connection line 277 from one of the third passage 273 and the first module connection line 276 that has a higher pressure.

The chamber connection line 277 includes a pressure sensor 279, which outputs a signal corresponding to the pressure in the chamber connection line 277 to the second controller 232. While the first brake module 211 supplies air to the brake chamber 250 through the first module connection line 276, the second shuttle valve 266, and the chamber connection line 277, the second controller 232 learns the relationship between the pressure and the deceleration based on the pressure detection signal from the pressure sensor 279. The deceleration is obtained from the master ECU 210 through the on-board network 234. The master ECU 210 calculates the deceleration based on the vehicle speed signal received from the vehicle speed sensor 233 and signals received from other sensors including an acceleration sensor. Further, in addition to the relationship between the deceleration and the pressure, the second controller 232 may learn the relationship between the vehicle speed and the pressure.

Referring to Figs. 28 to 34, the operation of the air supply system including the forced brake module 213 and the second brake module 212 is now described.

As shown in Fig. 28, the second and third electromagnetic control valves 262 and 263 of the second brake module 212 and the first electromagnetic control valve 241 of the forced brake module 213 are non-energized when the ignition switch (IG) is OFF, the vehicle is parked with the parking brake applied, and the master ECU 210, the first controller 231, and the second controller 232 are in normal conditions. The air pressure control valve 243 is in the discharge position, discharging the air in the section of the first passage 271 downstream of the air pressure control valve 243 and shutting the upstream section of the first passage 271. The second electromagnetic control valve 262 is in the shutoff position, shutting the second passage 272. No air is thus supplied to the air pressure signal line 274, so that the relay valve 265 is in the discharge position. Accordingly, neither of the first and second brake modules 211 and 212 supplies air to the brake chamber 250.

Referring to Fig. 29, a situation is described in which the master ECU 210, the first controller 231, and the second controller 232 are in normal conditions, the ignition switch (IG) is ON, and the parking brake is released. The first electromagnetic control valve 241 is controlled by the master ECU 210 to be energized and placed in the discharge position. This discharges the air in the section of the first passage 271 downstream of the first electromagnetic control valve 241 and shuts the upstream section of the first passage 271. Further, releasing the parking brake causes an air pressure signal to be input to the signal input port 243P of the air pressure control valve 243, placing the air pressure control valve 243 in the connection position. The second electromagnetic control valve 262 and the third electromagnetic control valve 263 are non-energized. This places the second electromagnetic control valve 262 in the shutoff position, shutting the second passage 272. No air is thus supplied to the air pressure signal line 274, so that the relay valve 265 shuts the third passage. As a result, no air is supplied from the second brake module 212 to the brake chamber 250, preventing interference with the control of the first brake module 211. To decelerate the vehicle 200, the air supplied from the first brake module 211 is supplied to the first control chamber 251 of the brake chamber 250 through the second shuttle valve 266.

Any abnormality occurring in the second controller 232 results in the same condition as shown in Fig. 29. Thus, the second brake module 212 does not interfere with the control of the first brake module 211.

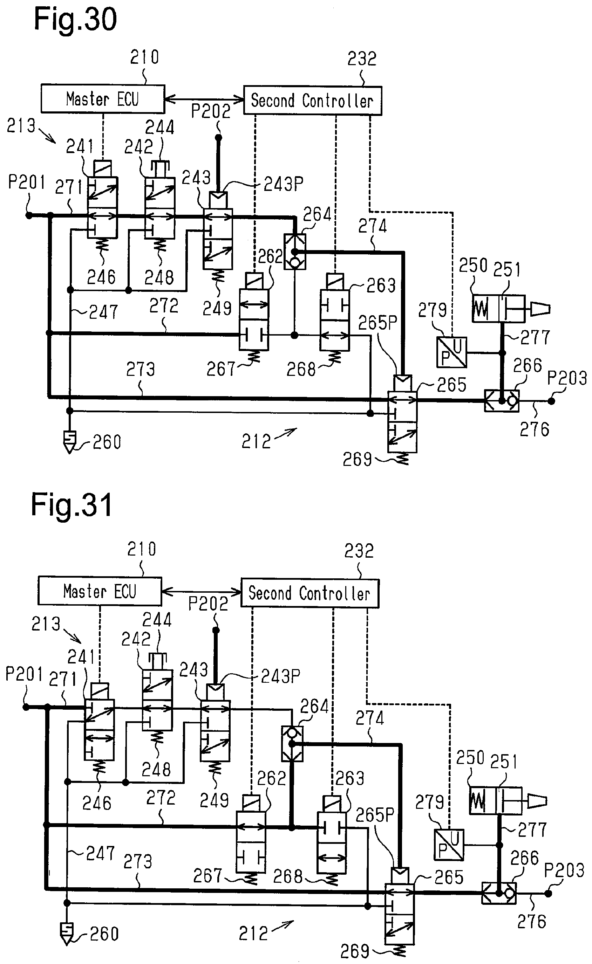

Referring to Fig. 30, the forced brake mode is now described. The forced brake mode is enabled when one of the following situations occurs. The master ECU 210 is capable of detecting any abnormality in the first and second controllers 231 and 232.

Under the condition that the ignition switch (IG) is ON and that the parking brake is released, the forced brake mode is enabled if:
an abnormality occurs in the master ECU 210;
abnormalities occur in the master ECU 210 and the first controller 231;
abnormalities occur in the master ECU 210 and the second controller 232;
abnormalities occur in the first controller 231 and the second controller 232; or
abnormalities occur in the master ECU, the first controller 231, and the second controller.

When an abnormality occurs in the master ECU 210, the first electromagnetic control valve 241, the second electromagnetic control valve 262, and the third electromagnetic control valve 263 are all de-energized. When the master ECU 210 operates normally but abnormalities occur in the first and second controllers 231 and 232, the master ECU 210 de-energizes the first electromagnetic control valve 241. The second and third electromagnetic control valves 262 and 263 are also de-energized because the second controller 232 is incapable of energizing there valves.

When an air pressure signal is input to the signal input port 243P, the air pressure control valve 243 is placed in the connection position. Air is supplied to the first passage 271 from the suspension air tank 225, and the second passage 272 is shut because the second electromagnetic control valve 262 is in the shutoff position. Thus, the first passage 271 has a higher pressure than the second passage 272, so that the first shuttle valve 264 permits airflow from the first passage 271 to the air pressure signal line 274. When an air pressure signal is input to the signal input port 265P, the relay valve 265 opens the third passage 273. Since no air is supplied to the brake chamber 250 from the first brake module 211, the second shuttle valve 266 permits airflow from the second brake module 212 to the chamber connection line 277. Air in the suspension air tank 225 is thus supplied to the first control chamber 251 of the brake chamber 250 through the third passage 273, the relay valve 265, and the second shuttle valve 266. Consequently, the forced brake is applied, decelerating the lead vehicle 200a or a following vehicle 200b.

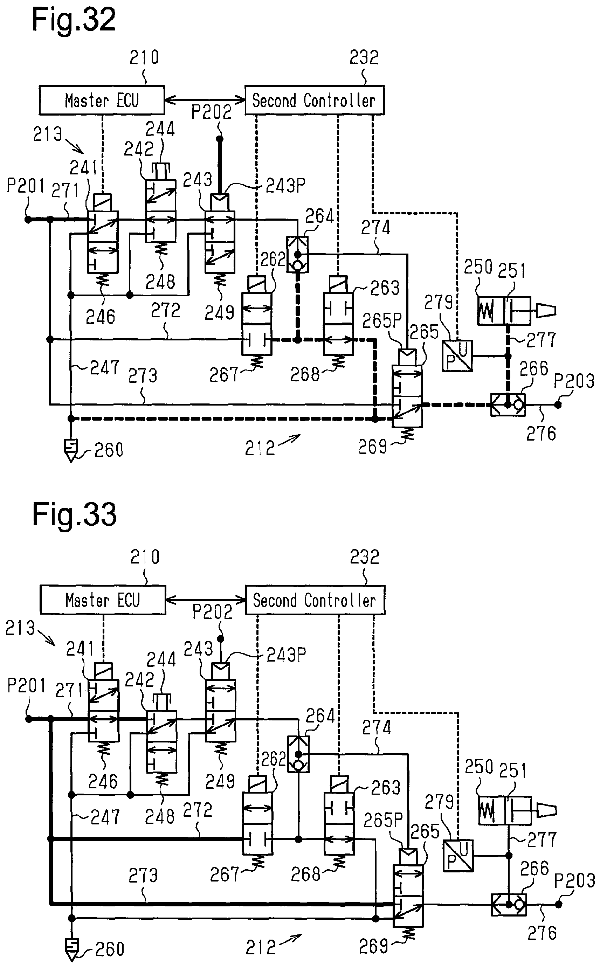

Referring to Figs. 31 and 32, the deceleration command mode of the second brake module 212 is now described. The deceleration command mode is enabled when the parking brake is released, the master ECU 210 and the second controller 232 operate normally, and an abnormality occurs in the first controller 231.

As shown in Fig. 31, when detecting an abnormality in the first controller 231, the master ECU 210 outputs a deceleration command to the second controller 232 depending on the deceleration state of the vehicle 200 immediately in front and the vehicle speed signal received from the vehicle speed sensor 233. When determining that deceleration is necessary, the master ECU 210 energizes the first electromagnetic control valve 241 and outputs a deceleration command to the second controller 232. In response to the deceleration command received from the master ECU 210, the second controller 232 energizes the second electromagnetic control valve 262 and the third electromagnetic control valve 263.

The first electromagnetic control valve 241 is placed in the discharge position, discharging the air in the first passage 271 through the discharge port 260. The second electromagnetic control valve 262 is in the connection position, and the third electromagnetic control valve 263 is in the shutoff position. As such, the second passage 272 is opened at the second electromagnetic control valve 262 but shut at the third electromagnetic control valve 263. This allows the second passage 272 to have a higher pressure than the first passage 271, so that the first shuttle valve 264 permits airflow from the second passage 272 to the air pressure signal line 274. An air pressure signal is thus input to the signal input port 265P of the relay valve 265, and the air supplied to the third passage 273 is supplied to the brake chamber 250 through the relay valve 265 and the second shuttle valve 266.

As shown in Fig. 32, when the master ECU 210 determines that deceleration should be avoided based on the deceleration state of the vehicle 200 Immediately in front, the master ECU 210 maintains the first electromagnetic control valve 241 in the energized state but stops outputting the deceleration command to the second controller 232. The second controller 232 de-energizes the second and third electromagnetic control valves 262 and 263. The bold broken lines connecting valves in Fig. 32 indicate air lines from which air is being discharged.

The second electromagnetic control valve 262 is in the shutoff position, and the third electromagnetic control valve 263 is in the connection position. This allows the air in the air pressure signal line 274 to flow through the first shuttle valve 264, a part of the second passage 272, and the discharge line 247, which connects the third electromagnetic control valve 263 to the discharge port 260, and is discharged from the discharge port 260. This places the relay valve 265 in the discharge position. As a result, the air in the first control chamber 251 of the brake chamber 250 is discharged from the discharge port 260 through the second shuttle valve 266, the relay valve 265, and the discharge line 247. The service brake is thus released.

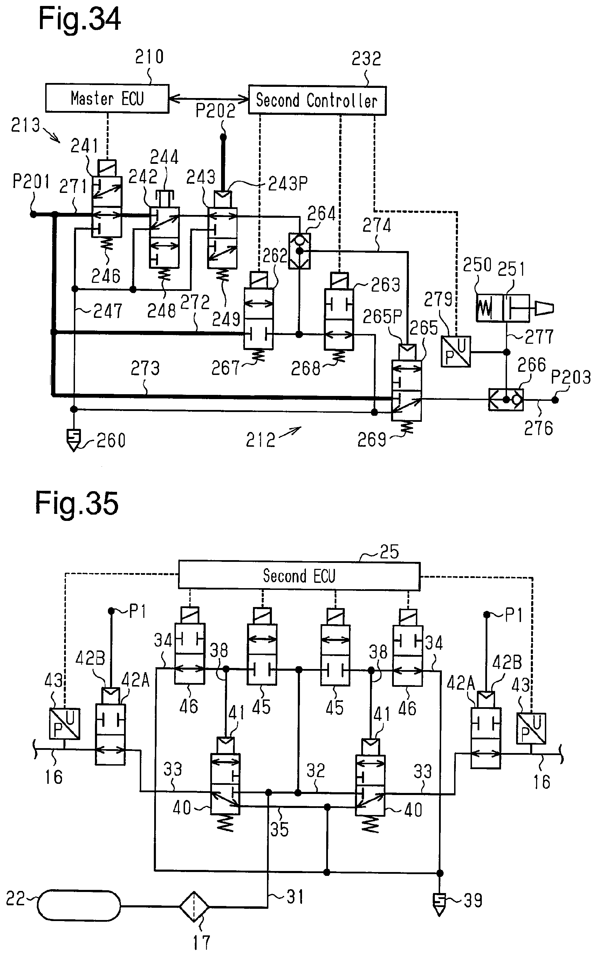

Referring to Figs. 33 and 34, the re-driving mode is now described. The re-driving mode is used to restart driving after the forced brake is applied. Restarting driving after the forced brake is applied allows the driver to move the vehicle 200 to a nearby maintenance station, for example.

As shown in Fig. 33, immediately after the forced brake is applied, the first electromagnetic control valve 241, the second electromagnetic control valve 262, and the third electromagnetic control valve 263 are non-energized. In addition, after the forced brake is applied, the parking brake is applied by a separate air supply system. The driver operates the operation portion 244 of the forced-brake release valve 242, so that the forced-brake release valve 242 is placed in the discharge position, shutting the first passage 271. The air in the air pressure signal line 274 is sent to the discharge line 247 through the first shuttle valve 264 and the air pressure control valve 243 and discharged from the discharge port 260. This places the relay valve 265 in the discharge position, allowing the air in the first control chamber 251 of the brake chamber 250 to be discharged through the discharge line 247 and the discharge port 260. As such, the forced brake module 213 is prevented from applying the forced brake through the second brake module 212.

As shown in Fig. 34, when the parking brake is released by the separate air supply system, an air pressure signal is input to the signal input port 243P of the air pressure control valve 243, placing the air pressure control valve 243 in the connection position. The air in the section of the first passage 271 downstream of the air pressure control valve 243 is discharged from the discharge port 260 through the air pressure control valve 243, the forced-brake release valve 242, and the discharge line 247. The second electromagnetic control valve 262 is in the shutoff position, shutting the second passage 272. The air pressure signal line 274 communicates with the discharge port 260 through the forced-brake release valve 242 even when the parking brake is released. This allows the forced brake to remain released.

As described above, the present embodiment has the following advantages.
(12) The forced brake module 213 includes the first electromagnetic control valve 241, which is in the connection position for supplying air to the brake chamber 250 when non-energized. Thus, even when an abnormality occurs in at least one of the first controller 231, the second controller 232, and the master ECU 210, it is possible to supply air to the brake chamber 250 through the first electromagnetic control valve 241 without electromagnetically controlling the valves. This allows the forced brake to be applied by forcibly supplying air to the brake chamber 250. As such, the safety of the pneumatic brake system is improved.
(13) The input side of the forced brake module 213 is in communication with the suspension air tank 225, and the output side is in communication with the signal input port 265P of the relay valve 265 of the second brake module 212. This allows the forced brake to be applied and released by controlling the second brake module 212 with air pressure signals from the forced brake module 213. As such, it is sufficient for the forced brake module 213 to only have the structure for outputting air pressure signals to the second brake module 212, thereby simplifying the structure of the forced brake module 213 or reducing the number of components of the forced brake module 213.
(14) Even while the second brake module 212 is not activated, the second controller 232 learns the correlation between the deceleration and the pressure of the air supplied to the brake chamber 250. The second controller 232 is thus capable of controlling the supply of air to the brake chamber 250 based on the result of learning when receiving a deceleration command from the master ECU 210.
(15) The air in the air pressure signal line 274 is discharged by manually operating the operation portion 244 of the forced-brake release valve 242. Thus, even when the parking brake is released, it is possible to stop the application of the forced brake caused by an abnormality in the second controller 232, for example.
(16) The air pressure control valve 243 is configured such that its position is switchable between the connection position, in which the air pressure control valve 243 connects the suspension air tank 225 to the air pressure signal line 274 when the parking brake is released, and the shutoff position, in which the air pressure control valve 243 shuts the connection between the suspension air tank 225 and the air pressure signal line 274 when the parking brake is applied. The forced brake is thus not applied while the parking brake is applied.
(17) The forced brake module 213 includes the relay valve 265. The relay valve 265 includes the signal input port 265P, which is connected to the suspension air tank 225, and an output port, which is connected to the second brake module 212. The relay valve 265 receives an air pressure signal, which is the air that has passed through the first electromagnetic control valve 241. The relay valve 265 shuts the connection between the suspension air tank 225 and the second brake module 212 when no air pressure signal is input, but connects the suspension air tank 225 to the second brake module 212 when an air pressure signal is input. Thus, the relay valve 265, when receiving an air pressure signal, supplies air to the second brake module 212 from the suspension air tank 225. As such, even if the air signal line has a small inner diameter, air Is quickly supplied to the second brake module 212 without using the air signal line.
(18) Each wheel of the vehicle 200 includes a second brake module 212, and the forced brake module 213 is connected to all second brake modules 212. This eliminates the need for providing a forced brake module 213 for each wheel, thereby simplifying the air supply system or reducing the number of components of the air supply system.

### Other Embodiments

The above described embodiments may be modified as follows.

As shown in Fig. 35, the switching portion 42 of the first and second embodiments may be a switching portion 42A including a valve that opens and closes in response to air pressure signals. When no air pressure signal is input to its signal input port 42B, the switching portion 42A is in the connection position, in which the switching portion 42A connects the chamber connection line 16 to the third flow passage 33. When an air pressure signal is input to the signal input port 42B, the switching portion 42A is placed in the shutoff position, in which the switching portion 42A disconnects the chamber connection line 16 from the third flow passage 33.

In the first and second embodiments, two safety modules 12 share the common second ECU 25, but each safety module 12 may have a separate second ECU 25.

The first to sixth embodiments each use two separate air supply sources, the suspension air tank 22, 122 as the air supply source of the safety module 12, 112 and the brake air tank 15, 115 as the air supply source of the main module 11, 111. However, the safety module 12, 112 and the main module 11, 111 may share the common air supply source.

In the first and second embodiments, the second ECU 25 controls the safety module 12 based on the result of learning, but the second ECU 25 may control the safety module 12 using predetermined values instead of the result of learning. This reduces the calculation burden on the second ECU 25.

In the first and second embodiments, the circuit 12A of one of the wheels on one axle is connected by the second flow passage 32 to the circuit 12B of the other wheel, but the circuit 12A may be separated from the circuit 12B. In this case, the pressure of the circuit 12A and the pressure of the circuit 12B may be controlled separately, allowing for individual control of the braking force for each wheel.

The air supply system of the first and second embodiments described above is installed in a combination vehicle including a tractor and a trailer. In other embodiments, the air supply system may be installed in other vehicles, such as a bus, a truck with an integral cargo platform, a passenger car, and a train car.

In the third to sixth embodiments, the air supply system forms the brake system of a following vehicle 101, but the air supply system may be installed in the lead vehicle 100.

In the third to seventh embodiments, the air supply system forms the brake system of a vehicle 100, 200 for platoon driving, but the air supply system may be installed in the brake system of a vehicle that does not travel in a platoon with other vehicles.

In the third to seventh embodiments, the air supply system is installed in a cargo vehicle having a cargo platform. In other embodiments, the air supply system may be installed in other vehicles, such as a passenger car, a combination vehicle having a tractor and a connected trailer, and a train car.

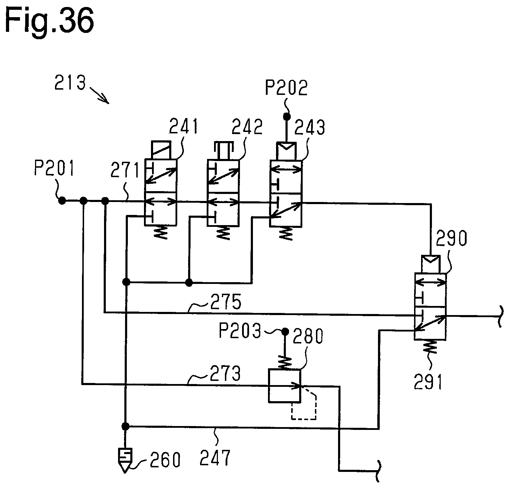

As shown in Fig. 36, the forced brake module 213 of the seventh embodiment may include a pressure reducing valve 280. In platoon driving, the vehicles travel while maintaining a fixed distance between one another. That is, deceleration of the leading vehicle 200 in the platoon causes the second vehicle 200 immediately behind the leading vehicle 200 to decelerate following the leading vehicle 200, and the third vehicle 200 decelerates following the second vehicle 200. When one of the vehicles 200 in the platoon brakes suddenly, this vehicle 200 will collide with the following vehicle 200b immediately behind. As such, control is required that performs deceleration in the forced pressure-reduction brake mode without causing collisions with the vehicles 200 in front and behind. The pressure reducing valve 280 is used to adjust the braking force of each vehicle. The braking force may be adjusted according to the cargo load by using the pressure of the air suspension, which is associated with the cargo load. The pressure reducing valve 280 is adjusted such that a vehicle that is closer to the rear end of the platoon has a greater air pressure for braking and thus a greater braking force. As such, a rearward vehicle decelerates earlier than a frontward vehicle, thereby avoiding a collision.

The pressure reducing valve 280 is arranged in the third passage 273 and adjusts the pressure of the air being supplied to the first control chamber 251 of the brake chamber 250 through the third passage 273 according to the pilot pressure received in the connection port P203. The connection port P203 is connected to the suspension system to supply the pressure of the air suspension, which is associated with the cargo load. The greater the cargo load on the vehicle 200, the greater the pressure in the connection port P203. If the pressure in the connection port P203 exceeds a predetermined value when the forced brake is applied, the pressure reducing valve 280 opens the third passage 273 such that the pressure increases by a predetermined amount.

The pressure reducing valve 280 may adjust the pressure as follows. The maximum pressure of the compressed air supplied to the downstream side of the third passage 273 from the pressure reducing valve 280 is set corresponding to the braking force required for the maximum load capacity of the vehicle 200. That is, when the cargo load on the vehicle 200 is equal to the maximum load capacity, the pressure is set such that the braking force provided by the forced brake will be the maximum. A decrease in the cargo load on the vehicle 200 from the maximum load capacity, that is, a decrease in the pressure in the connection port P203, causes the pressure reducing valve 280 to reduce the pressure of compressed air supplied to the downstream side of the third passage 273 accordingly. This adjusts the braking force such that a greater cargo load on the vehicle results in application of the service brake with a greater braking force and that a smaller cargo load on the vehicle results in application of the service brake with a smaller braking force.

The configuration described above adjusts the braking force by adjusting the pressure of the compressed air. However, brake control that prevents collisions in platoon driving may be achieved by adjusting the brake timing.

When the forced brake module 213 is separated from the second brake module 212 in the seventh embodiment, the forced brake module 213 may include a relay valve 290 having an input port connected to the suspension air tank 225 and an output port connected to the first shuttle valve 264 of the second brake module 212. The relay valve 290 is connected to a passage 275, which branches off from a section of the first passage 271 that is closer to the suspension air tank 225 than the first electromagnetic control valve 241, the discharge line 247, and a passage to the first shuttle valve 264. The relay valve 290 receives an air pressure signal, which is the air that has passed through the air pressure control valve 243. When no air pressure signal is input, the relay valve 290 shuts the passage 275, thereby shutting the connection between the suspension air tank 225 and the second brake module 212 and connecting the discharge line 247 to the passage to the first shuttle valve 264. When an air pressure signal is input, the relay valve 290 opens the passage 275, connecting the suspension air tank 225 to the second brake module 212. When no air pressure signal is input, the relay valve 290 is placed in the discharge position by the urging force of a valve spring 291. This configuration allows the relay valve 290 to, when an air pressure signal is input, supply a large amount of air flowing from the suspension air tank 225 to the second brake module 212. As such, even if the forced brake module 213 is separated from the second brake module 212, air is quickly supplied to the air pressure signal line 274.

In the seventh embodiment, the first electromagnetic control valve 241, the air pressure control valve 243, the second electromagnetic control valve 262, the third electromagnetic control valve 263, and the relay valve 265 are two-position valves, but these valves may be three-position valves having neutral positions.

In the seventh embodiment, the first controller 231 and the second controller 232 are separate devices, but other configurations may be used. For example, a single controller connected to the on-board network 234 may include two CPUs and perform the function of the first controller 231 and the function of the second controller 232. In this case, the first controller 231 and the second controller 232 may have a common signal input portion and a common signal output portion. This configuration still improves the safety of the pneumatic brake system.

## Claims

1. An air supply system (12) configured to be used in a brake electronic control system, be positioned in parallel with a main brake circuit (11) controlled by a main controller (18), and perform supply and discharge of air to and from a brake chamber (50) that applies a service brake, the air supply system comprising:
a relay valve (40) configured to be in communication with the brake chamber (50), an air supply source (22), and a discharge port (39), wherein a position of the relay valve (40) is switchable between a connection position, in which the relay valve (40) connects the air supply source (22) to the brake chamber (50), and a discharge position, in which the relay valve (40) connects the brake chamber (50) to the discharge port (39);
a switching portion (42) configured to connect the main brake circuit (11) to the brake chamber (50) when the main brake circuit (11) is operating, and connect the relay valve (40) to the brake chamber (50) when the main brake circuit (11) is not operating; and
a controller (25) that controls the position of the relay valve (40), wherein the relay valve (40) is connected to two control valves and the controller (25) is configured to control energizing and de-energizing of the two control valves to control the position of the relay valve (40),
**characterized in that**
the two control valves include:
a first control valve (45), which is in a connection position when energized by the controller and is in a shutoff position when non-energized; and
a second control valve (46) located between the first control valve (45) and the discharge port (39), wherein the second control valve (46) is in a shutoff position when energized by the controller (25) and is in a connection position when non-energized,
the relay valve (40) has a signal line (38) connected to a section between the first control valve (45) and the second control valve (46), and
the controller (25) is configured to place the relay valve (40) in the discharge position when the first control valve (45) and the second control valve (46) are non-energized and place the relay valve (40) in the supply position when the first control valve (45) and the second control valve (46) are energized.

2. The air supply system according to claim 1, further comprising:
a pressure sensor (43) that detects pressure in a flow passage connecting the switching portion (42) to the brake chamber (50), wherein
the controller (25) is configured to
based on a signal corresponding to a vehicle speed that is input from a vehicle speed detection portion (62) and pressure detected by the pressure sensor (43), learn a relationship between the pressure and the vehicle speed, and
when the main brake circuit (11) is not operating, control pressure in the brake chamber (50) based on a requested value of deceleration and a result of the learning.

3. The air supply system according to claim 1 or 2, wherein the air supply source (22) connected to the relay valve (40) differs from an air supply source (15) of the main brake circuit (11).

## Patentansprüche

1. Luftzufuhr-System (12), das so ausgeführt ist, dass es in einem elektronischen Brems-Steuerungssystem eingesetzt wird, parallel zu einem Haupt-Bremskreis (11) positioniert wird, der von einem Hauptregler (18) gesteuert wird, und Zuleitung und Ableitung von Luft zu und von einer Bremskammer (50) durchführt, die eine Betriebsbremse betätigt, wobei das Luftzufuhr-System umfasst:
ein Relaisventil (40), das so ausgeführt ist, dass es mit der Bremskammer (50), einer Luftzufuhr-Quelle (22) und einer Ableit-Öffnung (39) in Verbindung steht, wobei eine Position des Relaisventils (40) zwischen einer Verbindungs-Position, in der das Relaisventil (40) die Luftzufuhr-Quelle (22) mit der Bremskammer (50) verbindet, und einer Ableit-Position umgeschaltet werden kann, in der das Relaisventil (40) die Bremskammer (50) mit der Ableit-Öffnung (39) verbindet;
einen Umschalt-Abschnitt (42), der so ausgeführt ist, dass er den Haupt-Bremskreis (11) mit der Bremskammer (50) verbindet, wenn der Haupt-Bremskreis (11) in Betrieb ist, und das Relaisventil (40) mit der Bremskammer (50) verbindet, wenn der Haupt-Bremskreis (11) nicht in Betrieb ist; sowie
eine Steuerungseinrichtung (25), die die Position des Relaisventils (40) steuert, wobei das Relaisventil (40) mit zwei Steuerventilen verbunden ist und die Steuerungseinrichtung (25) so ausgeführt ist, dass sie Erregung und Aberregung der zwei Steuerventile steuert, um die Position des Relaisventils (40) zu steuern,
**dadurch gekennzeichnet, dass**
die zwei Steuerventile einschließen:
ein erstes Steuerventil (45), das sich in einer Verbindungs-Position befindet, wenn es durch die Steuerungseinrichtung erregt wird, und sich in einer Absperr-Position befindet, wenn es nicht erregt wird; sowie
ein zweites Steuerventil (46), das zwischen dem ersten Steuerventil (45) und der Ableit-Öffnung (39) angeordnet ist, wobei sich das zweite Steuerventil (46) in einer Absperr-Position befindet, wenn es durch die Steuerungseinrichtung (25) erregt wird, und sich in einer Verbindungs-Position befindet, wenn es nicht erregt wird,
das Relaisventil (40) eine Signalleitung (38) aufweist, die mit einem Abschnitt zwischen dem ersten Steuerventil (45) und dem zweiten Steuerventil (46) verbunden ist, und
die Steuerungseinrichtung (25) so ausgeführt ist, dass sie das Relaisventil (40) in die Ableit-Position versetzt, wenn das erste Steuerventil (45) und das zweite Steuerventil (46) nicht erregt werden, und das Relaisventil (40) in die Zuleit-Position versetzt, wenn das erste Steuerventil (45) und das zweite Steuerventil (46) erregt werden.

2. Luftzufuhr-System nach Anspruch 1, des Weiteren umfassend:
einen Drucksensor (43), der Druck in einem Strömungskanal erfasst, der den Umschalt-Abschnitt (42) mit der Bremskammer (50) verbindet, wobei
die Steuerungseinrichtung (25) so ausgeführt ist, dass sie
auf Basis eines einer Fahrzeuggeschwindigkeit entsprechenden Signals, das von einem Abschnitt (62) für Erfassung einer Fahrzeuggeschwindigkeit eingegeben wird, und einem Druck entspricht, der von dem Drucksensor (43) erfasst wird, eine Beziehung zwischen dem Druck und der Fahrzeuggeschwindigkeit lernt, und
wenn der Haupt-Bremskreis (11) nicht in Betrieb ist, Druck in der Bremskammer (50) auf Basis eines geforderten Abbrems-Wertes und eines Ergebnisses des Lernens steuert.

3. Luftzufuhr-System nach Anspruch 1 oder 2, wobei sich die mit dem Relaisventil (40) verbundene Luftzufuhr-Quelle (22) von einer Luftzufuhr-Quelle (15) des Haupt-Bremskreises (11) unterscheidet.

## Revendications

1. Système de distribution d'air (12) configuré pour être utilisé dans un système de commande électronique de frein, être positionné parallèlement à un circuit de frein principal (11) commandé par un contrôleur principal (18), et exécuter une alimentation et une décharge d'air vers et depuis une chambre de frein (50) qui applique un frein de service, le système de distribution d'air comprenant :
une valve relais (40) configurée pour être en communication avec la chambre de frein (50), une source d'alimentation en air (22) et un port de décharge (39), dans lequel une position de la valve relai (40) est commutable entre une position de connexion, dans laquelle la valve relai (40) connecte la source d'alimentation en air (22) à la chambre de frein (50), et une position de décharge, dans laquelle la valve relai (40) connecte la chambre de frein (50) au port de décharge (39) ;
une partie de commutation (42) configurée pour connecter le circuit de frein principal (11) à la chambre de frein (50) lorsque le circuit de frein principal (11) fonctionne, et connecter la valve relai (40) à la chambre de frein (50) lorsque le circuit de frein principal (11) ne fonctionne pas ; et
un contrôleur (25) qui commande la position de la valve relai (40), dans lequel la valve relai (40) est connectée à deux valves de commande et le contrôleur (25) est configuré pour commander une mise sous tension et hors tension deux valves de commande pour commander la position de la valve relai (40).
**caractérisé en ce que**
les deux valves de commande incluent :
une première valve de commande (45), qui est dans une position de connexion lorsque mise sous tension par le contrôleur et est dans une position de fermeture lorsque mise hors tension ; et
une deuxième valve de commande (46) installée entre la première valve de commande (45) et le port de décharge (39), dans lequel la deuxième valve de commande (46) est dans une position de fermeture lorsque mise sous tension par le contrôleur (25) et est dans une position de connexion lorsque mise hors tension,
la valve relai (40) est dotée d'une ligne de signal (38) connectée à une section entre la première valve de commande (45) et la deuxième valve de commande (46), et
le contrôleur (25) est configuré pour placer la valve relai (40) dans la position de décharge lorsque la première valve de commande (45) et la deuxième valve de commande (46) sont hors tension et placer la valve relai (40) dans la position d'alimentation lorsque la première valve de commande (45) et la deuxième valve de commande (46) sont sous tension.

2. Le système de distribution d'air selon la revendication 1, comprenant en outre :
un capteur de pression (43) qui détecte une pression dans un passage d'écoulement connectant la partie de commutation (42) à la chambre de frein (50), dans lequel
le contrôleur (25) est configuré pour
selon un signal correspondant à une vitesse de véhicule qui est entré en provenance d'une partie de détection de vitesse de véhicule (62) et une pression détectée par le capteur de pression (43), apprendre une relation entre la pression et la vitesse de véhicule, et
lorsque le circuit de frein principal (11) ne fonctionne pas, contrôler une pression dans la chambre de frein (50) fondée sur une valeur demandée de décélération et un résultat de l'apprentissage.

3. Le système de distribution d'air selon la revendication 1 ou 2, dans lequel la source d'alimentation en air (22) connectée à la valve relai (40) diffère d'une source d'alimentation en air (15) du circuit de frein principal (11) .
